# NEUE EUROPÄISCHE PATENTSCHRIFT

(11) **EP 1 294 474 B2**
(45) Veröffentlichungstag und Bekanntmachung des Hinweises auf die Entscheidung über den Einspruch: **23.01.2013**
(45) Hinweis auf die Patenterteilung: 10.05.2006
(21) Anmeldenummer: 01944938.8
(22) Anmeldetag: 14.05.2001
(51) Int. Cl.: B01F 5/00, B01J 19/24, B01J 19/26

(54) **VERFAHREN UND VORRICHTUNG ZUR PHYSIKALISCH-CHEMISCHEN BEHANDLUNG FLUIDER MEDIEN**
METHOD AND DEVICE FOR THE PHYSICOCHEMICAL TREATMENT OF FLUID MEDIA
PROCEDE ET DISPOSITIF DE TRAITEMENT PHYSICOCHIMIQUE DE MILIEUX FLUIDES

(30) Priorität: 14.05.2000 DE 10024902; 14.05.2000 DE 10024901; 14.05.2000 DE 10024900; 20.03.2001 DE 10114936
(43) Veröffentlichungstag der Anmeldung: 26.03.2003
(73) Patentinhaber: Lehmann, Jörg, 01157 Dresden (DE); Stäcker, Hans-Peter, 32257 Bünde (DE)
(72) Erfinder: Lehmann, Jörg, 01157 Dresden (DE); Stäcker, Hans-Peter, 32257 Bünde (DE)
(74) Vertreter: Uhlemann, Henry
(86) Internationale Anmeldenummer: PCT/DE2001/001868
(87) Internationale Veröffentlichungsnummer: WO 2001/087473

(56) Entgegenhaltungen:
- EP-A- 0 313 086
- WO-A1-97/30956
- AT-B- 272 278
- DE-A- 2 741 243
- DE-A- 3 912 344
- DE-A1- 19 525 920
- DE-C- 4 241 603
- DE-U1- 8 905 075
- GB-A- 1 060 540
- GB-A- 1 093 046
- US-A- 3 647 357
- US-A- 4 190 078
- US-A- 4 521 117
- US-A- 5 391 328
- US-A- 5 431 346
- US-A- 5 499 871
- US-A- 6 054 048

## Beschreibung

Die Erfindung betrifft ein Verfahren und eine Vorrichtung zur physikalisch-chemischen Behandlung fluider Medien. Als fluide Medien bzw. Fluide im Sinne dieser Lehre sind gasförmige und flüssige Stoffe und Gemische aus gasförmigen oder/und flüssigen Stoffen zu verstehen.

Das erfindungsgemäße Verfahren führt in dem behandelten Fluid zur Änderung der Oberflächenspannung
und der Viskosität des Fluids, zur mechanischen Zerkleinerung und Zerstörung von in einem Fluid enthaltenen organischen oder/und anorganischen Stoffen, Mikroorganismen wie beispielsweise Keimen, Bakterien, Pilzen oder Algen und zur chemischen Oxidation oder Reduktion von mitgeführten Stoffen und Stoffverbindungen.

Die erfindungsgemäße Vorrichtung führt das erfindungsgemäße Verfahren schnell, kostengünstig, platzsparend und umweltfreundlich durch.

Nach dem erfindungsgemäßen Verfahren bzw. mit der erfindungsgemäßen Vorrichtung behandelte Fluide, wie beispielsweise Wasser oder Brennstoffe, sind in allen Bereichen des täglichen Lebens einsetzbar. Wichtigste Einsatzgebiete sind Industrie, Gewerbe, privater Haushalt, Lebensmittelherstellung, Land- und Forstwirtschaft, Abfall- und Entsorgungswirtschaft, Reinigungstechnik, Entkeimung, Konservierung, Maschinenbau, Elektronik, Medizin und Therapie, Bauindustrie, Energietechnik.

Bislang wurden Änderungen von Oberflächenspannungen oder Viskositäten in Fluiden dadurch erreicht, daß beispielsweise bei Wasser entweder entsprechende chemische Substanzen zugegeben wurden oder über physikalische Methoden, wie Behandlung durch Permanentmagneten oder Elektromagneten, durch welche sich das Fluid bewegt, eine Reduzierung eintrat.

Der Einsatz beispielsweise oberflächenentspannten Wassers reicht von Waschlaugen zur Reinigung über Bauindustrie zur Betonherstellung, der Montanindustrie oder Ölförderung zur Verpressung in porösen Gesteinsschichten bis hin zu Wärmeübertragern oder Kühlsystemen. Die Verwendung von ausschließlich chemischen Substanzen bedingt bei vielen Prozessen in der Industrie eine Nachbehandlung der mit diesem Wasser bzw. Lauge in Berührung gekommenen Teilen, d.h. eine ausgiebige Spülung, wobei wiederum große Wasserressourcen verbraucht werden. Zudem ist die Beseitigung des anfallenden Abwassers aufwendig und zeitintensiv.

Physikalische Systeme haben demgegenüber eine natürliche Grenze der Oberflächenentspannung beispielsweise bei Wasser von 8-12 %. Zudem ist dadurch behandeltes Wasser nur begrenzt speicherfähig, da es nach verhältnismäßig kurzer Zeit seinen ursprünglichen Zustand wieder einnimmt.

Bislang wurden Fremdstoffe anorganischer oder organischer Form in Fluiden durch Filtration bis zu einer bestimmten Größe aus dem Fluid getrennt. Andere Verfahren sehen durch Zugabe von chemischen oder biologischen Reaktionskomponenten eine chemische Reaktion vor, so daß die daraus entstehenden Abprodukte
ausgefällt und auf mechanische Weise aus dem Fluid entfernt werden können. Weitere Verfahren zerstören mit hohem energetischen Aufwand, wie z.B. durch Ultraschall, vorhandene Strukturen und zerkleinern diese bis zu einem bestimmten Wirkungsgrad. Allen diesen Verfahren ist anhängig, daß neben dem Energieverbrauch ein verhältnismäßig hoher gerätetechnischer Aufwand nötig und in den meisten Fällen mehrere Prozeßstufen zum Erreichen des gewünschten Ergebnisses notwendig sind. Die Unterhaltung, Steuerung und der Betrieb derartiger Anlagen ist zeit- und kostenintensiv.

Bislang wurde die Reinigung chemisch oder biologisch belasteter Wässer durch aufwendige, meist mehrstufige Prozesse durchgeführt. Zum Einsatz kommen chemischbiologische Verfahren der Abwasserbehandlung, aber auch reine chemische Verfahren wie beispielsweise die Zugabe von Bakterioziden zu biologisch belasteten Brauch- und Nutzwässern. Andere Verfahren nutzen den Energieeintrag durch UV-Strahlen oder die Zugabe von Fällungsmitteln zur Beseitigung vorrangig chemischer oder biologischer Belastungen. Allen Verfahren ist anhängig, daß sie kostenintensiv sind und einen hohen technischen Aufwand erfordern sowie zu entsorgende Abprodukte erzeugen.

Vorrichtungen zum mechanischen Reinigen von Flüssigkeiten oder Gasen sind z.B. aus AT 272 278 und DE 195 25 920 bekannt. Grundlage dieser Vorrichtungen ist die Nutzung einer Reaktionskammer, bei welcher Wasser oder Abgase tangential eingeblasen werden, sich rotierend zum unteren Ende der Kammer bewegen, wobei über Öffnungen im unteren Scheitel des Gerätes Reaktionskomponenten zugegeben werden und die Reaktionskomponenten durch ein Auslaßrohr am unteren Ende der Reaktionskammer entgegen der bisherigen Strömungsrichtung die Kammer wieder verlassen.

Nach der Beschreibung in diesen Patentschriften wird beispielsweise Wasser der Kammer zugeführt. Entlang der Kammerwandung entsteht ein mit der Spitze nach unten gerichteter, wandernder Wirbel. Am unteren Scheitelpunkt wird dieser Wirbel mit einem Reaktionsmittel über eine oder mehrere koaxial angeordnete Düsen gemischt und wandert in Folge als Spirale auf der Innenseite in entgegengesetzte Richtung in ein verlängertes Auslaufrohr und in diesem in zykloiden Bewegungen nach oben. Nach AT 272 278 und DE 195 25 920 kann Wasser in zykloiden Bewegungen unter bestimmten Umständen die Fähigkeit haben, Synthesen verschiedener Art zu ermöglichen. Dabei beginnen die Reaktionen nach AT 272 278 im unteren Scheitelpunkt und setzen sich im Ausstoßrohr unter zykloiden Bewegungen fort. Für die Reaktion vorteilhaft ist dabei laut AT 272 278, daß durch einen "...inneren zentralen Sogwirbel Sekundärluft für die Reaktion angesaugt wird".

Derartige Wirbelbildungen sind u.a. auch bei Zyklonen oder Zentrifugen bekannt und fördern in geringem Maße chemische Reaktionen im Medium.

In DE 195 25 920 ist eine Ergänzung der Vorrichtung aus AT 272 278 beschrieben, bei welcher das zu reinigende Medium im Wechsel steigend und fallend durch miteinander verbundene Zulaufrohre strömt und im Anschluß nach dem Auslaß aus der Kammer in ein Rohrlabyrinth zur Sedimentation oder zum Abfangen der verdichteten Abprodukte geleitet wird.

Nachteile dieser Vorrichtungen bestehen in der komplizierten Ausführung, der Unhandlichkeit für einen gezielten technischen Einsatz, der mangelhaften Verstellbarkeit und daraus folgend schlechten Reproduzierbarkeit der Ergebnisse.

Bekannt sind Verfahren und Vorrichtungen lediglich zur Mischung fluider Medien unter Nutzung unterschiedlich ausgestalteter rotationsymmetrischer Mischkammem (US 5,391,328, US 4,521,117, DE-OS 27 41 243, GB 1,060,540, US 3,647,357, US 5,391,328, US 4,521,117, DE-OS 27 41 243). Aus DE 39 12 344 A1, EP 313 086 A1, DE 42 41 603 Cl und US 5,499,871 A1 sind Verfahren und Vorrichtungen zur Herstellung einer Öl-Wasser-Emulsion bekannt, bei dem einer rotationsymmetrischen Mischkammer ein Gemisch unter Druck zugeführt wird. GB 1,093,046 offenbart eine Vorrichtung zur Reinigung von Gasen oder Dämpfen. US 4,190,078 beschreibt eine Vorrichtung zur Umwandlung von Drallströmungsenergie in Druckenergie.

Die Aufgabe der Erfindung besteht in der Schaffung eines umweltfreundlichen Verfahrens zur physikalisch-chemischen Behandlung fluider Medien zum Abbau organischer und anorganischer Inhaltsstoffe fluider Medien, Abtötung von Mikroorganismen wie Bakterien, Pilze, Keime, Algen usw., Zerkleinerung langkettiger molekularer Verbindungen und Abbau durch chemische Reaktionen, Änderung der Viskosität oder/und der Oberflächenspannung von Fluiden und einer Vorrichtung zur Durchführung des Verfahrens.

Diese Aufgabe wird mit den in den Patentansprüchen 1 und 8 aufgeführten Merkmalen gelöst. Vorteilhafte Ausgestaltungen des erfindungsgemäßen Verfahrens und der erfindungsgemäßen Vorrichtung sind in den Ansprüchen 2 bis 7 und 9 bis 24 angegeben.

Erfindungsgemäß wird dem zu behandelnden Fluid Energie dadurch zugeführt, daß mindestens zwei Volumenströme des Fluids mit hoher Geschwindigkeit bei Richtungsgleichheit der Strömungen in Form einer Translations- oder/und Rotationsbewegung mit unterschiedlicher Geschwindigkeit oder bei jeweils gegenläufiger Strömungsrichtung mit frei wählbarer oder gegebenenfalls gleicher Geschwindigkeit sich flächig berührend ineinander oder aneinander so geführt werden, daß eine hohe Reibung zwischen beiden Schichten sowie hohe Zentrifugalkräfte in den einzelnen Volumenströmen entstehen. Weitere Ausgestaltungen des erfindungsgemäßen Verfahrens beinhalten die Merkmale der untergeordneten Ansprüche 2 bis 7.

Die Führung der Volumenströme erfolgt vorzugsweise als Zwangsführung in einem Rohr- oder Behältersystem dergestalt, daß gleichzeitig Rotations- und Translationsbewegung der Volumenströme möglich ist. Die Volumenströme können aus verschiedenen Quellen stammen oder durch Teilung eines Volumenstromes in zwei Teilvolumenströme entstehen. Die Teilvolumenströme können alternativ auch durch Umlenkung eines Volumenstroms erzeugt werden, so daß die physikalisch-chemischen Prozesse zwischen zwei Abschnitten des gleichen Volumenstroms ablaufen

Die Geschwindigkeit der Volumenströme ist so zu wählen, daß sich strömungstechnisch eine turbulente Grenzschicht ausbilden kann und die Volumenströme zueinander eine hohe Geschwindigkeitsdifferenz aufweisen.

Die Volumenströme sind so zu erzeugen daß sich aufgrund der Strömungsgeschwindigkeit lediglich in der turbulenten Grenzschicht eine Verwirbelung und Durchmischung zwischen beiden Grenzschichten aufbauen kann. Die einzelnen Volumenströme selbst können dabei ab der Grenzschicht als laminare oder als turbulente Strömung vorliegen.

Vorzugsweise wird eine Kombination aus Translationsbewegung und gleichzeitiger Rotationsbewegung so gewählt, daß sich die Volumenströme in gegenläufiger Richtung berühren oder ein Volumenstrom so umgelenkt wird, daß der in Richtung Ablauf bewegende Teil eine Bewegungsrichtung entgegen der Richtung des Zulaufes hat.

Die Wahl der Geschwindigkeit des Volumenstromes hängt vom behandelten Medium ab und kann je nach dem vorrangigen Zweck der Behandlung aus der Stärke der Nebenvalenzbindung bzw. der Festigkeit der Moleküle ermittelt werden. Dabei ist die Zentrifugalkraft oder/und die Translationskraft so zu wählen, daß ein Aufbrechen mindestens eines Teiles der Nebenvalenzbindungen stattfindet, ein Aufbrechen der Stoffverbindungen und Molekülketten der Fremdstoffe stattfindet und diese mechanisch zerstört bzw. zerkleinert werden oder/und die vorhandenen Fremdstoffe oder die Atome, Moleküle oder Molekülverbindungen des fluiden Mediums mindestens teilweise ionisiert bzw. radikalisiert werden.

Die hohe Bewegungsenergie, der Energieeintrag durch Reibung beider Volumenströme an- oder ineinander, die damit verbundene hohe Zentrifugalkraft oder/und Translationskraft, sowie die Reibungskraft bewirken durch Aufbrechen und Neuformierung der vorhandenen Nebenvalenzbindungen aufgrund deren unterschiedlicher Atommassen und damit unterschiedlicher Masseträgheit sowie durch Kollision der einzelnen Teilchen, Atome und Atomgruppen sowie Moleküle untereinander eine Neuordnung der Molekül- bzw. Gitterstruktur zu einem energetisch stabilen und ausgeglichenen, optimalen Zustand und Verbund und somit eine Änderung der im Normalfall vorliegenden Oberflächenspannung oder/und Viskosität.

Diese Änderungen können durch Änderung der Geschwindigkeiten je nach vorhandenem Medium eingestellt werden. Durch die damit erreichte Neuordnung der Molekülstruktur werden in dem Fluid gelöste Gase oder flüchtige Fremdstoffe freigesetzt, so daß zusätzlich eine Entgasung stattfindet. Durch diese Entgasung werden zusätzlich unerwünschte Reaktionen dieser mitgeführten Stoffe im zu behandelnden Medium selbst, zu anderen mitgeführten Stoffen oder zu Stoffen, welche mit dem Fluid in Berührung kommen, wie Meßfühler oder Rohrwandungen, verringert oder verhindert.

Bei Wahl der Strömungsgeschwindigkeit kann eine Stofftrennung aufgrund der unterschiedlichen spezifischen Gewichte der im fluiden Medium befindlichen Stoffe in jedem einzelnen Volumenstrom erreicht werden, welche bei Translations- und Rotationsbewegung verstärkt wird.

Das erfindungsgemäß behandelte Fluid oder Fluidgemisch behält seinen Oberflächenentspannten Zustand oder die geänderte Viskosität über längere Zeit bei. Mitgeführte Stoffe werden aus der Gitterstruktur des fluiden Mediums gelöst oder/und über die Zentrifugalkraft aufgrund der unterschiedlichen spezifischen Stoffgewichte vom Medium getrennt und können im Anschluß sedimentiert werden.

Die hohe Bewegungsenergie, der Energieeintrag durch Reibung beider Volumenströme an- oder ineinander , die damit verbundene hohe Zentrifugalkraft oder/und Translationskraft , sowie die Reibungskraft bewirkt im Fremdstoff durch Kollision der organischen oder/und anorganischen Stoffe, Stoffverbindungen, pflanzlichen oder/und organischen Lebewesen, wie beispielsweise Keime, Bakterien, Pilze oder Algen untereinander und zu den einzelnen Teilchen, Atomen und Atomgruppen sowie Molekülen des fluiden Mediums eine mechanische Zerstörung und Zerkleinerung dieser Fremdstoffe.
Zudem werden organische Substanzen, Stoffe oder Stoffverbindungen, pflanzliche oder andere organische Lebewesen durch ihre eigene Masseträgheit aufgrund der unterschiedlichen spezifischen Gewichte und die hohe Translations- oder/und Zentrifugalkraft zerstört.

Die Quantität und die Qualität dieser mechanischen Zerstörung und Zerkleinerung kann durch Änderung der Geschwindigkeiten je nach vorhandenem Fluid und Fremdstoffen eingestellt werden. Sie ist abhängig von der Widerstandsfähigkeit gegen mechanische Belastungen der Fremdstoffe.

Die so zerstörten Fremdstoffe können im Anschluß herausgefiltert, sedimentiert oder anderweitig gebundenwerden.

Die hohe Bewegungsenergie, der Energieeintrag durch Reibung beider Volumenströme an- oder ineinander, die damit verbundene hohe Zentrifugalkraft oder/und Translationskraft, sowie die Reibungskraft bewirkt durch Kollision von kleinsten Teilchen wie α-Teilchen oder Elektronen mit den Atomen, Molekülen oder/und Molekülverbindungen des Fluids oder/und des Fremdmediums bei diesen eine Anlagerung oder Verlust von Elektronen und damit eine negative (Anionen) oder positive (Kationen) Ladung dieser Stoffe. Darüber hinaus kann durch Aufspaltung von Molekülen oder/und Anlagerung von Atomen oder Molekülen eine Bildung von Radikalen vorgenommen werden.

Diese vorliegenden Ionen oder Radikale sind chemisch hochaffine Produkte und reagieren sofort zum Erreichen eines stabilen atomaren Energiezustandes mit anderen vorliegenden Atomen, Molekülen oder Molekülverbindungen des Fluids, der mitgeführten oder zugegebenen Fremdstoffe oder untereinander unter Bildung entsprechender Oxidations- oder Reduktionsprodukte.

Durch mitgeführte oder/und zugegebene Oxidationsmittel wie beispielsweise Ozon oder Sauerstoff können Kohlenwasserstoffverbindungen oder/und andere organische Verbindungen wie Keime, Bakterien und Kleinstlebewesen oxidiert werden. Dabei entsteht u.a. H₂O und CO₂, d.h. es fmdet bei organischen Substanzen eine Denaturierung statt.

Zur Durchführung des Verfahrens wird erfindungsgemäß eine Vorrichtung gewählt, die mindestens zwei Zuflussöffnungen und einen Ablauf sowie die Möglichkeit der gezielten Dosierung von Zugabestoffen, welche gasförmig oder als Flüssigkeit oder als Feststoffe vorliegen können, besitzt, und die Länge der Berührungsstrecke der beiden Volumenströme eine vollständige Durchmischung aus dem sich ergebenden Reibungswiderstand der Volumenströme und damit verbundenem Energieverlust, verhindert. Die Vorrichtung ist so gestaltet, daß sich der Strömungswiderstand durch Stellmöglichkeiten an den Zuflussöffnungen, dem Zugabemedium und am Gerät selbst einstellen läßt.

Die Erfindung wird als Vorrichtung zur physikalisch-chemischen Behandlung fluider Medien auch durch eine Fluidreaktoranlage mit den Merkmalen nach Anspruch 8 gelöst. Vorteilhafte Ausgestaltungen der Erfindung beinhalten die Merkmale nach den Ansprüchen 9 bis 24.

Die Fluidreaktoranlage besteht aus einem Gehäuse mit einem rotationssymmetrischen, im Längsschnitt herzförmigen Hohlraum (der Reaktionskammer), einem oder mehreren mit der Reaktionskammer verbundenen Zuflüssen und einem Abfluß für das zu behandelnde Medium, einem Zufluß für ein Zugabemedium und Peripheriebauteilen wie Schläuchen oder Rohren zum Medientransport, Ventilen, Strömungsteilern, Vorbehandlungseinheit.

In dem Gehäuse befindet sich ein rotationssymmetrischer Hohlraum mit mindestens einem Medienzufluß und mindestens einem Medienabflußrohr. Der Hohlraum und die Zu- bzw. Abflußöffnungen sind derart gestaltet und zueinander angeordnet, daß in dem zu behandelnden Fluid beim Durchströmen des Hohlraums von der Einlaß- zur Auslaßöffnung möglichst große, durch Reibung der einzelnen Strömungsschichten untereinander und mit der Wandung des Hohlraums erzeugte Schubspannungen erzeugt werden.

Das Gehäuse verfügt im oberen Teil seitlich über mindestens einen Medienzufluß mit einer in den Hohlraum mündenden Zuflußöffnung. Zweckmäßigerweise sind der oder die Medienzuflüsse so angeordnet, daß das zu behandelnde Fluid im Querschnitt der Zuflußöffnung tangential zur Mantelfläche des Hohlraums und mit fallender Einströmrichtung in den Hohlraum tritt.

Ebenfalls im oberen Teil des Hohlraums verfügt das Gehäuse über eine zentral angeordnete Abflußdurchführung, die vorzugsweise in Richtung der Längsachse des Hohlraums und dadurch mit ihr zusammenfallend durch die Wandung des Gehäuses geführt ist.

Durch diese Abflußdurchführung ist ein Abflußrohr in den Hohlraum bis fast an das untere Ende desselben eingeführt, wobei das Abflußrohr in der Abflußdurchführung verschieblich gelagert ist, so daß der Abstand zwischen der Mündung des Abflußrohres und dem unteren Ende des Hohlraums verstellbar ist.

In einer vorteilhaften Ausgestaltung der Erfindung ist das Abflußrohr im mündungsnahen Bereich als Lavaldüse ausgeführt.

Die Kontur des Hohlraums ähnelt im Längsschnitt der eines Herzens.

In dem in Einbaulage unteren Teil des Gehäuses ist ein Zufluß mit einer oder mehreren in den Hohlraum mündenden Öffnungen für ein zweites Medium zentral angeordnet, dessen Auslauf zweckmäßigerweise in Form eines rohrförmigen Fortsatzes des Gehäusematerials in das Innere des Hohlraums ragt. Der rohrförmige Fortsatz ergibt sich konstruktiv aus dem durch die Konturumkehr des Hohlraums entstehenden, aus dem Boden des Hohlraums ragenden Zapfens. Dieser ist zum Zwecke der Zuführung eines zweiten Mediums mit einer oder mehreren, parallel zur gedachten Längsachse des Hohlraums angebrachten, Bohrungen versehen.

Zur Optimierung der Druck- und Strömungsverhältnisse in der Reaktionskammer kann der Zufluß für das Zugabemedium analog zum Ablaufrohr als separates, relativ zum Reaktorgehäuse in Richtung der gedachten Längsachse des Hohlraums verschieblich mit diesem verbundenes Bauteil ausgeführt sein.

Die Funktion der erfindungsgemäßen Vorrichtung beruht im wesentlichen auf der Initiierung chemischer Reaktionen durch Schaffung geeigneter Druckverhältnisse vor dem Abflußrohr, auf den in dem fließenden Medium auf unterschiedlich schwere Bestandteile unterschiedlich stark wirkenden Zentrifugal- und Zentripetalkräften und den durch Schubspannungen zwischen Strömungsschichten unterschiedlicher Geschwindigkeit hervorgerufenen Reibungskräften. Die konstruktive Gestaltung der Erfindung ist so gewählt, daß dem Medium beim Durchfließen der Reaktionskammer unter definiertem Staudruck eine Geschwindigkeit mit einem möglichst hohen Maximalwert und einem möglichst großen Gradienten in radialer Richtung verliehen wird.

Diese Bedingungen werden von der erfindungsgemäßen Vorrichtung dadurch erfüllt, daß in dem zu behandelnden Medium ein Zyklon erzeugt wird, bei dessen Durchlaufen der Volumenstrom eine vom Radius abhängige, insgesamt in Längsrichtung zunehmende Geschwindigkeit erfährt.

Die zur Erzeugung einer möglichst starken Zentrifugenwirkung und möglichst großer Schubspannungen in dem zu behandelnden Fluid benötigten Strömungsverhältnisse werden durch die konstruktive Gestaltung des Reaktors erzielt. Durch die Kontur des Hohlraums des Reaktors wird der Volumenstrom des zu behandelnden Mediums so gelenkt, daß sich im absteigenden Ast des Strömungsverlaufs (das heißt zwischen Medienzufluß und Mündung des Medienabflusses) ein Zyklon ausbildet. Die Strömungsgeschwindigkeit im Zyklon weist über dessen Querschnitt in radialer Richtung einen starken Gradienten auf. Dadurch werden zum einen Schubspannungen zwischen den einzelnen Strömungsschichten untereinander, aber auch zwischen der Wandung der Reaktionskammer und dem zu behandelnden Medium, erzeugt.

Die durch die Schubspannungen erzeugten und diesen entgegengesetzten Reibungskräfte innerhalb des Volumenstroms führen aufgrund einer Neuordnung der Bindungen zwischen den Molekülen des zu behandelnden Mediums zu einer Absenkung der Oberflächenspannung und einer Veränderung der Viskosität des Fluids.

Außerdem wird eine Mahlwirkung erzielt. Die hohe Geschwindigkeitsdifferenz zwischen dem Volumenstrom und der Wand der Reaktionskammer führt zu einer Zertrümmerung fester Bestandteile, wie zum Beispiel Bakterien, Algen und anderer Mikroorganismen. Die entstehenden Trümmer werden in der Folge auf chemischem Wege abgebaut.

Darüberhinaus verjüngt sich der Querschnitt der Reaktionskammer auf dem Weg vom Medienzufluß zum Medienabfluß so, daß die Zyklonströmung stark beschleunigt wird. Die dadurch ansteigende kinetische Energie
der Elementarteilchens des Mediums führt zum Anstieg der Reaktionsfähigkeit.

Am unteren Ende der Reaktionskammer wird die bis hierher in fallender Schraubenlinie fließende Strömung zum Zentrum der Strömung und dort in eine aufsteigende Richtung umgelenkt. In diesem Bereich kommt es zu einer starken Zentrifugenwirkung, weil die als Schwebeteilchen mitgeführten anorganischen oder/und organischen Verunreinigungen aufgrund ihrer höheren Wichte vom Zentrum des Zyklons zu seinem Rand getrieben werden, während gelöste gasförmige Bestandteile aufgrund ihrer geringeren Wichte vom Rand des Zyklons zu seinem Zentrum getrieben werden. Bei der stattfindenden Richtungsänderung des Volumenstromes im unteren Teil der Reaktionskammer bewegen sich die schon getrennten Verunreinigungen und Medien unterschiedlicher Wichte erneut über den über den Querschnitt des Volumenstromes in die entgegengesetzte Richtung.

Treffen diese hochreaktiven Bestandteile des zu behandelnden Mediums aufeinander, so kommt es zu chemischen Reaktionen wie beispielsweise einer Kaltoxidation, in deren Ergebnis Schadstoffe abgebaut werden.

Die Stärke der beschriebenen Effekte und damit die Wirksamkeit der erfindungsgemäßen Vorrichtung sind druck-, geschwindigkeits- und temperaturabhängig. Die herzförmige Innenkontur der Reaktionskammer bewirkt in dem sich bildenden Zyklon eine so starke Beschleunigung des Volumenstroms, daß die in dem Medium ablaufenden biologischen, physikalischen und chemischen Prozesse ebenfalls beschleunigt werden. Extensive Versuche mit verschiedenen Innenkonturen und Einstellungen der Prozeßparameter ergaben, daß bei Verwendung einer herzförmigen Innenkontur in Verbindung mit der Einstellung medienspezifisch veränderlicher Parameter wie Volumenstrom, Fließdruck und Staudruck des zu behandelnden Mediums, Art und Menge des Zugabemediums, Kontur der Lavaldüse und Stellung des Zugabemedienzuflusses und des Medienabflusses zueinander und Medientemperatur, optimale Erfolge erzielt werden.

Durch die Gestaltung des Abflußrohres im mündungsnahen Bereich als Lavaldüse in Verbindung mit dem der Reaktionskammer zugeführten Volumenstrom wird das Medium im Abflußrohr stark beschleunigt und entspannt, wodurch bei Flüssigkeiten der Dampfdruck im Kernbereicht erreicht oder unterschritten werden kann, und eine Strömung mit im Kern- und Randbereich stark unterschiedlichen Geschwindigkeiten entsteht. Bei geringen Strömungsgeschwindigkeiten entsteht ein Hohlwirbel, in dessen Zentrum sich ein Kern aus leichterem Fluid als im übrigen Strömungsfeld bildet. Bei wachsender Geschwindigkeiten werden Wirbelströmungen mit Wirbelfaden oder Wirbelröhre oder, je nach Art des Mediums, ein drehungsfreier Wirbel mit Wirbelkern, auch als Potentialwirbel bekannt, erzeugt. Dabei werden nochmals Schubspannungen im fließenden Medium erreicht, die die physikalischen und chemischen Prozesse weiter befördern.

Besondere Vorteile der erfindungsgemäßen Vorrichtung bestehen darin, daß damit bei geringem Platz- und Kostenaufwand ohne Zugabe umweltschädlicher Chemikalien und ohne Bestrahlung des Mediums oder sonstige potentiell gefährliche Maßnahmen ein effektiver, kostengünstiger Prozeß durchgeführt werden kann, in dessen Ergebnis je nach Anwendungszweck Abwässer entgiftet und entkeimt wieder der Nutzung zugeführt werden können, Wasserreservoirs keimfrei gehalten werden können, in Gebieten mit Wasserknappheit eine Versorgung mit Frischwasser sichergestellt werden kann, die Benetzungsfähigkeit verschiedener Flüssigkeiten erhöht werden kann, die Verwendung waschaktiver Chemikalien zu verschiedensten Reinigungszwecken inHaushalt und Industrie signifikant vermindert und so die Umweltbelastung reduziert werden kann oder dickflüssige Medien ohne chemische Veränderung auf rein mechanischem Wege verdünnt werden können.

Die genannten Anwendungsmöglichkeiten sind nur einige Beispiele für die Vielseitigkeit und Umweltfreundlichkeit der erfindungsgemäßen Vorrichtung.

Zur Erzielung optimaler Ergebnisse ist die Einhaltung einiger Prozeßparameter, wie Fließdruck des zu behandehiden Mediums, Geschwindigkeitsprofil des Zyklons und Staudruck in der Reaktionskammer, Zugabe affiner Reaktionspartner in der jeweils benötigten Konzentration je nach Anwendungszweck unbedingt notwendig. Hierfür werden mit der erfindungsgemäßen Vorrichtung erstmals die notwendigen Voraussetzungen geschaffen.

Durch die geometrische Gestaltung der Reaktionskammer werden die benötigten hohen und stark gradientenbehafteten Geschwindigkeiten im Medium erzeugt. Diese werden zur Erzielung der physikalischen Effekte, d.h. zur Zertrümmerung fester Bestandteile und zur Neuordnung molekularer Bindungen, und zur Auslösung und Beschleunigung der chemischen Prozesse durch Zufuhr von Energie benötigt.

Die Verwendung von Pumpen oder/und Kompressoren erzeugt in Verbindung mit der Verstellbarkeit des Medienabflussrohrs sowie dem Verhältnis der Zulaufdurchmesser und des Durchmessers des Medienabflussrohres den benötigten Staudruck.

Die dosierte Einspeisung von Oxidationsmitteln oder anderen als Reaktionspartnern dienenden Zugabemedien nicht nur in das Medienabflußrohr, sondern auch in den Hauptzufluß, d.h. bevor das zu behandelnde Medium in die Reaktionskammer tritt, sorgt für eine signifikante Steigerung der Reaktionsgeschwindigkeit. Diese kann durch katalytisch wirkende Beschichtung der medienführenden Teile der Vorrichtung, oder/und Änderung der Temperatur nochmals gesteigert werden.

Besonders effektiv lassen sich die beschriebenen Prozesse durchführen, wenn eine Prozeßsteuerund Regeleinrichtung verwendet wird, die aufgrund gemessener prozeßrelevanter Kenngrößen die obengenannten Parameter ständig an die augenblicklichen Erfordernisse anpaßt.

Anhand von Zeichnungen wird die Erfindung näher erläutert. Dabei zeigen
- Fig. 1: die Reaktionskammer
- Fig. 2: die Fluidreaktoranlage
- Fig. 3: die in einen Kreislauf eingebundene Fluidreaktoranlage
- Fig. 4: die Fluidreaktoranlage mit einer integrierten Regelung

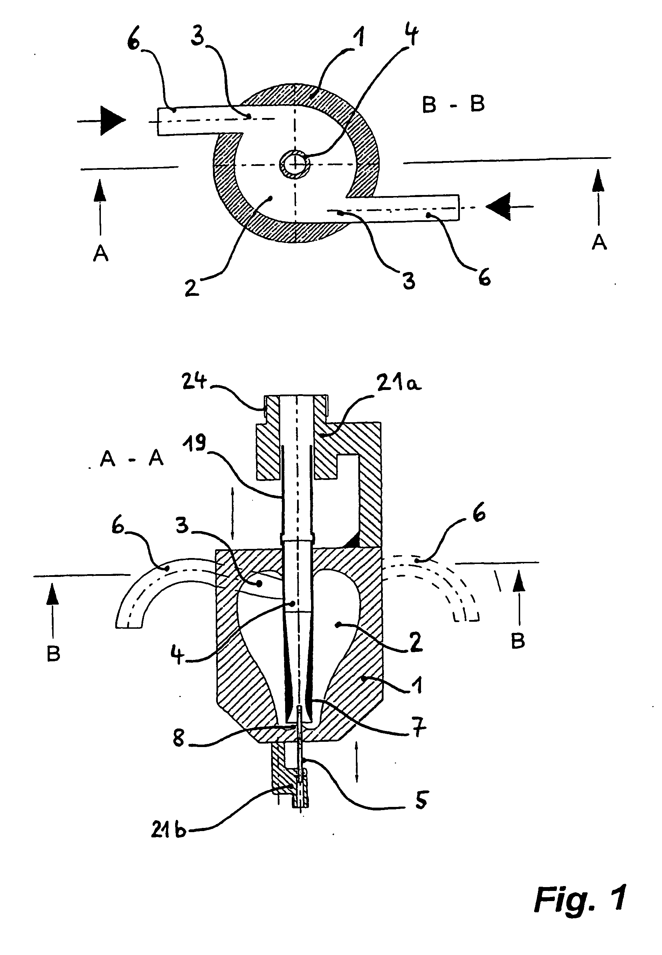

Fig. 1 zeigt den prinzipiellen Aufbau der Reaktionskammer der erfindungsgemäßen Vorrichtung im Querschnitt (Ansicht B-B) und im Längsschnitt (Ansicht A-A).

In einem Gehäuse (1) befindet sich ein rotationssymmetrischer, im Längsschnitt herzförmiger Hohlraum (2), der als Reaktionskammer dient. An das Gehäuse (1) angeschlossen sind zwei Medienzuflüsse (3), ein Medienabflußrohr (4) für das zu behandelnde Medium, ein Zugabemedienzufluß (5) und Peripheriebauteile wie Schläuche oder Rohre (6) zum Medientransport.

Die Reaktionskammer, die Medienzuflüsse (3) und das Medienabflußrohr (4) sind derart gestaltet und zueinander angeordnet, daß in dem zu behandelnden Fluid beim Durchströmen des Hohlraums (2) von der Einlaß- zur Auslaßöffnung möglichst große, durch Reibung der einzelnen Strömungsschichten untereinander und mit der Wandung des Hohlraums (2) hervorgerufene Schubspannungen erzeugt werden.

Die Reaktionskammer ist ein in Einbaulage bezüglich der gedachten Längsachse rotationssymmetrischer Hohlraum (2) des Gehäuses (1), der in seinem oberen Teil seitlich über mindestens einen Medienzufluß (3) mit einer in den Hohlraum (2) mündenden Zuflußöffnung verfügt. Zweckmäßigerweise sind der oder die Medienzuflüsse (3) so angeordnet, daß das zu behandelnde Fluid im Querschnitt der Zuflußöffnung tangential zur Mantelfläche des Hohlraums (2) und mit fallender Einströmrichtung in den Hohlraum (2) tritt.

Ebenfalls im oberen Teil des Hohlraums (2) verfügt das Gehäuse (1) über eine zentral angeordnete Bohrung, die vorzugsweise in Richtung der Längsachse des Hohlraums (2) und dadurch mit dieser zusammenfallend durch die Wandung des Gehäuses (1) geführt ist.

Durch diese Bohrung ist ein Medienabflußrohr (4) in den Hohlraum (2) bis fast an das untere Ende desselben eingeführt, wobei das Medienabflußrohr (4) in der Bohrung verschieblich gelagert ist, so daß der Abstand zwischen der Mündung des Medienabflußrohres (4) und dem unteren Ende des Hohlraums (2) verstellbar ist.

In einer vorteilhaften Ausgestaltung der Erfindung ist das Medienabflußrohr (4) im mündungsnahen Bereich als Lavaldüse (7) ausgeführt.

Die Kontur des Hohlraums (2) ähnelt im Längsschnitt der eines Herzens.

Der Radius des Querschnitts des Hohlraums (2) vergrößert sich zunächst degressiv entlang der Längsachse, deren Ursprung an der oberen Begrenzung des Hohlraums (2) gedacht ist, bis die Tangente an den Konturverlauf des Längsschnitts des Hohlraums (2) parallel zu dieser Längsachse verläuft. Dieser Punkt wird etwa bei 1/4 bis 1/3 der Gesamtlänge der gedachten Längsachse des Hohlraums (2) erreicht. Der Radius des Querschnitts des Hohlraums (2) erreicht hier seinen Maximalwert.

Von hier aus verringert sich der Radius des Querschnitts mit zunehmender Längskoordinate zunächst progressiv bis zu einer Längskoordinate, die ca. 2/3 bis 3/4 der Gesamtlänge der Längsachse entspricht.

Danach verringert sich der Radius des Querschnitts des Hohlraums (2) degressiv, das heißt der Konturverlauf des Längsschnitts des Hohlraums (2) nähert sich asymptotisch an eine zur gedachten Längsachse parallele Linie an.

Den Abschluß des herzförmigen Hohlraums (2) bildet eine bogenförmige Kontur, die den Konturverlauf umkehrt, das heißt die Kontur des Hohlraums (2) verläuft nun parallel zur gedachten Längsachse senkrecht aufwärts in Richtung Bohrung. Im Bereich dieser Konturumkehr hat der Querschnitt des Hohlraums (2) einen inneren und einen äußeren Radius. Dabei bildet der innere Radius die Mantelfläche eines aus dem Boden des Hohlraums in diesen hineinragenden Zapfens (8).

In dem in Einbaulage unteren Teil des Gehäuses (1) ist ein Zugabemedienzufluß (5) mit einer oder mehreren, am Ende des rohrförmigen Zapfens (8) in den Hohlraum (2) mündenden Öffnungen zentral angeordnet. Zur Optimierung der Druck- und Strömungsverhältnisse in der Reaktionskammer ist der Zugabemedienzufluß (5) analog zum Medienabflußrohr (4) als separates, relativ zum Gehäuse (1) in Richtung der gedachten Längsachse des Hohlraums (2) verschieblich mit diesem verbundenes Bauteil ausgeführt.

Besonders vorteilhaft für optimale Ergebnisse ist die Verwendung von katalytischen Beschichtungen in der Reaktionskammer und der Lavaldüse (7) sowie allen sonstigen medienführenden Teilen der Vorrichtung, da hierdurch ein beschleunigter Ablauf der gewünschten chemischen Reaktionen erreicht werden kann.

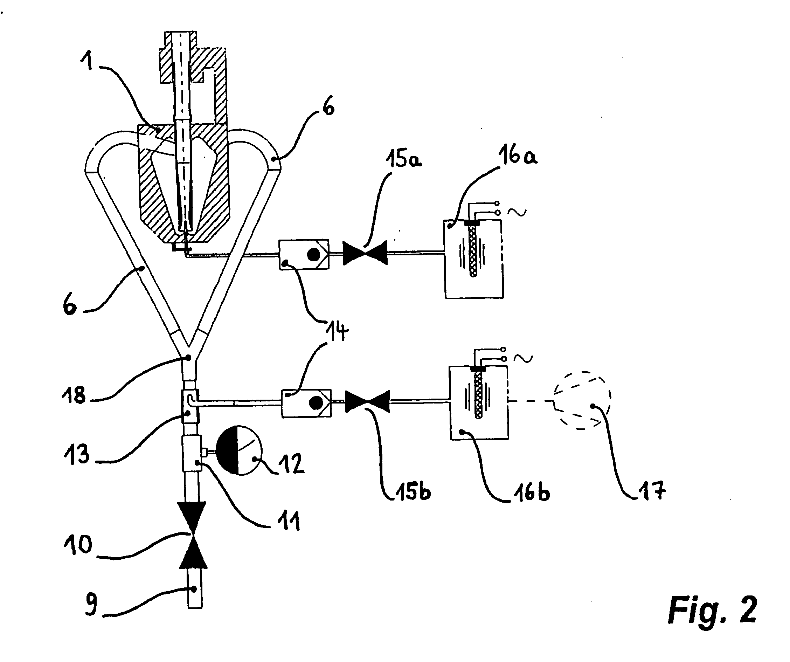

Fig. 2 zeigt den prinzipiellen Aufbau der erfindungsgemäßen Fluidreaktoranlage.

Das zu behandelnde Medium wird der Reaktionskammer über eine Hauptanschlußleitung (9) zugeführt. Zur Steuerung des Volumenstromes ist in der Hauptanschlußleitung (9) ein Regelventil (10) angeordnet. Im Anschluß daran befinden sich in der Hauptanschlußleitung (9) Meßwertaufnehmer (11) für die Aufnahme prozeßrelevanter Meßdaten wie Druck, Temperatur, Volumenstrom, Zusammensetzung des Mediums oder chemische oder/und biologische Belastungen. Diese Meßeinrichtungen können so ausgeführt sein, daß neben der visuellen Meßwertausgabe auf geeigneten Ausgabeeinheiten (12) die Meßwerte auch kontinuierlich oder diskontinuierlich für nachfolgende Steuer- oder Regelprozesse bereitgestellt werden.

Daran anschließend ist eine Zugabeeinrichtung (13) zur Dosierung von Zugabemedien wie z.B. Luft, Sauerstoff, Ozon, H₂O₂, die als Reaktionskomponenten bereitgestellt werden sollen, angeordnet. Die Einleitung des Zugabemediums in die Zugabeeinrichtung (13) kann vorteilhaft durch eine Injektionsdüse so erfolgen, daß durch strömungstechnisch bedingte Unterdruckverhältnisse in der Hauptanschlußleitung (9) das Zusatzmedium selbst angesaugt wird.

Gegen ungewollten Eintritt des zu behandelnden Mediums in die Zuleitung des Zugabemediums ist in dieser eine Sperreinrichtung wie z.B. ein Rückschlagventil (14) eingesetzt. Zur manuellen oder automatischen Dosierung des Zugabemediums befindet sich in der Zuleitung des Zugabemediums außerdem ein Feinregelventil (15b).

Ist das Zugabemedium gasförmig und ein Oxidationsmittel, wie beispielsweise Sauerstoff oder Luft, so kann dieses zur Verbesserung der Oxidationseigenschaften durch eine vorgeschaltete Vorbehandlungseinrichtung (16b) ionisiert bzw. zu Radikalen wie z.B. Ozon umgewandelt werden.

Zur Erhöhung des Volumenstromes des Zugabemediums über das durch die Selbstansaugung bedingte Maß hinaus kann eine Kompressoreinrichtung (17) in die Zuleitung des Zugabemediums integriert oder der Vorbehandlungseinrichtung (16b) vorgeschaltet sein.

Im Anschluß an die Zugabeeinrichtung (13) wird der Volumenstrom des zu behandelnden Mediums in zwei oder mehrere Teilvolumenströme aufgeteilt, die in separaten Zulaufrohren (6) zur Reaktionskammer (2) geführt, werden. Dabei ist die Verwendung von Strömungsteilern (18) von Vorteil, welche zur Optimierung der Strömungsverhältnisse und zur Verringerung von Druckverlusten über einen Spreizwinkel von weniger als 120° verfügen.

Die Zulaufrohre (6) führen das zu behandelnde Medium zum Gehäuse (1), wo es in die Medienzuflüsse (3) eintritt. Diese münden tangential zum Querschnitt des Hohlraums (2) mit zum unteren Scheitelpunkt der Reaktionskammer geneigter Fließrichtung in den Hohlraum (2). Hierdurch wird das zu behandelnde Medium in einer abwärts gerichteten Schraubenlinie von den Medienzuflüssen (3) zur Mündung des Medienabflußrohrs (4) geleitet.

Da die chemischen Reaktionen durch den hohen Druck im Hohlraum (2) selbst ablaufen und das Medienabflußrohr (4) mit der typischen zykloiden Sogwirbelbildung dadurch lediglich die Funktion einer Nachreaktion und eines kontinuierlichen Prozeßausganges erhält, ist die Ausbildung eines hohen Staudruckes im Hohlraum (2) selbst notwendig.

Dieser wird erreicht durch entsprechende Wahl des anstehenden Vordruckes des zu behandelnden Mediums in Verbindung mit der Dimensionierung der Medienzuflüsse (3) und des Medienabflußrohrs (4) selbst. Dabei hat sich gezeigt, daß ein Staudruck von mindestens 2,5 bar zur Durchführung einer Reaktion mit hohem Wirkungsgrad benötigt wird. Dies kann z.B. dadurch erreicht werden, daß die Summe der Querschnitte aller Medienzuflüsse (3) doppelt so groß gewählt wird wie der kleinste Querschnitt des Medienabflusses (4).

Das Medienabflußrohr (4) selbst ist in seinem unteren Teil als Lavaldüse (7) ausgebildet und ragt axial einstellbar in den Hohlraum (2) hinein. Dabei besteht das Medienabflußrohr (4) aus zwei oder mehreren miteinander verbundenen Teilen, wobei der obere, aus dem Gehäuse (1) herausragende sichtbare Teil als Schaurohr (19) aus durchsichtigem Material und der untere Teil als Lavaldüse (7) ausgeführt ist.

Die axiale Verstellung des Medienabflußrohrs (4) erfolgt über eine mechanische Verstelleinheit. Das Medienabflußrohr (4) ist in einem fest mit dem Gehäuse (1) verbundenen oder relativ dazu fixierten Axiallager (21a) so aufgenommen, daß eine axiale Verstellung während des Betriebes möglich ist, ohne daß sich die Position der Schnittstelle zwischen dem Gehäuse (1) und der Rohrleitung der Hauptanschlußleitung (9) ändert. Dadurch ist eine Anpassung der Betriebsparameter jederzeit bedarfsgerecht und ohne großen Aufwand möglich.

Die Medienzugabe für die chemische Nachreaktion im Medienabflußrohr (4) kann ebenfalls durch Druck oder vorteilhaft durch Nutzung des Unterdruckes in der Lavaldüse (7) erfolgen. In gleicher Weise wie das Medienabflußrohr (4) ist der Zugabemedienzufluß (5) verstellbar so ausgeführt, daß die Position der Schnittstelle zwischen dem Gehäuse (1) und der Rohrleitung der Abflußleitung bei Einstellarbeiten unverändert bleibt.

Dazu ist der Verstellmechanismus des unteren Zugabemedienzuflusses (5) so gestaltet, daß eine Nachstellung oder -regelung zum optimalen Unterdruckpunkt in das Medienabflußrohr (4) hinein ermöglicht wird. Dazu ist der Zugabemedienzufluß (5) in einem fest mit dem Gehäuse (1) verbundenen oder relativ dazu fixierten Axiallager (21b) verschieblich gelagert. Die Einstellung kann manuell oder über einen Regelalgorithmus mittels Verstelleinheit erfolgen.

In die Zuleitung des Zugabemediums ist gegen ungewollten Austritt des zu behandelnden Mediums ein Rückschlagventil (14) sowie zur manuellen oder automatischen Dosierung des Zugabemediums ein Feinregelventil (15a) eingesetzt. Ist das Zugabemedium gasförmig und ein Oxidationsmittel wie beispielsweise Sauerstoff oder Luft, so kann dieses durch eine vorgeschaltete Vorbehandlungseinrichtung (16a) ionisiert bzw. zu Radikalen wie z.B. Ozon umgewandelt werden.

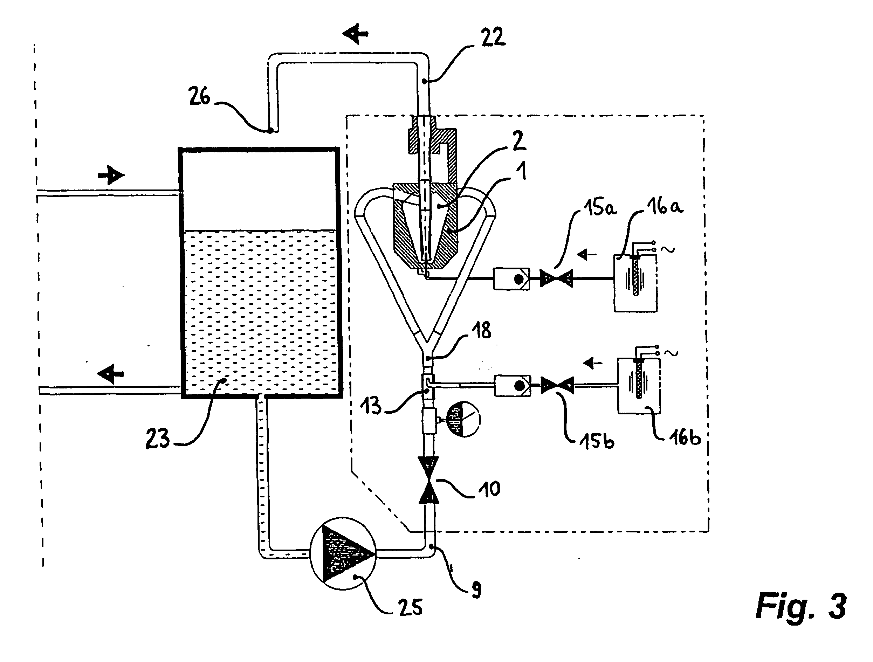

Fig. 3 zeigt eine bevorzugte Ausführungsform der Erfindung. Dabei ist der Einsatz einer erfindungsgemäßen Fluidreaktoranlage in einem Medienkreislauf mit einem separaten Speicherbehälter (23) dargestellt. Der von der Strichpunktlinie umschlossene Bereich entspricht der Darstellung in Fig. 2. Aus Gründen der Übersichtlichkeit sind in Fig. 3 in diesem Bereich nicht alle Bestandteile der Vorrichtung mit Bezugszeichen versehen, es wird daher auf die entsprechenden Angaben in Fig. 2 verwiesen.

Die Nennweite der Hauptanschlußleitung (9) beträgt dabei 25 mm. Zur Volumenstromregelung ist ein Regelventil (10) eingesetzt. Nach dem Regelventil (10) ist ein Manometer als Meßwertaufnehmer (11) mit integrierter Ausgabeeinheit (12) sowie nachfolgend eine Zugabeeinrichtung (13) in Form einer Injektordüse angebracht.

Die Zugabeeinrichtung (13) saugt aufgrund des Unterdrucks in der Hauptanschlußleitung (9) selbsttätig ein Oxidationsmittel, in diesem Fall Umgebungsluft, an. Zur Verhinderung von Rückschlägen des zu behandelnden Mediums in die Ansaugleitung ist diese mit einem Rückschlagventil (14) versehen. Die Einstellung des Volumenstromes des Oxidationsmittels erfolgt über ein Feinregelventil (15b).

Zweckmäßigerweise wird als Oxidationsmittel Umgebungsluft verwendet, welche durch eine regelbare Ionisationseinheit, die als Vorbehandlungseinrichtung (16b) dient, aufbereitet wird. Nach der Zugabeeinrichtung (13) wird der Volumenstrom durch ein Y-Stück als Strömungsteiler (18) mit einem Schenkelwinkel der abgehenden Schenkel von 45° in zwei gleichgroße Teilströme geführt. Die Zuführung in die Reaktionskammer erfolgt über zwei tangential in den Hohlraum (2) mündende, um 180° versetzte und in einem axialen Anstellwinkel von 15° zur Längsachse des Hohlraums (2) rechtsdrehend angeordnete Medienzuflüsse (3).

Der größte Durchmesser des Hohlraums (2) beträgt 136 mm. Der kleinste Durchmesser des Hohlraums (2) beträgt 64 mm. Der Außendurchmesser des Medienabflußrohrs (4) beträgt 36 mm. Aus diesen Maßen ergibt sich ein Querschnittsverhältnis von 4300 mm² : 700 mm², d. h. der größte Querschnitt der Reaktionskammer ist mehr als sechsmal so groß wie der kleinste Kammerquerschnitt. Hierdurch wird die für einen effektiven Reaktionsprozeß benötigte Beschleunigung des Volumenstroms in dem sich ausbildenden Zyklon erreicht.

Das Medienabflußrohr (4) ist dreigeteilt; im unteren Bereich als auswechselbare Lavaldüse mit dem kleinsten Durchmesser von 15 mm, ausgebildet. Der obere Teil besteht aus einem durchsichtigen, wechselbaren
Kunststoffrohr der Nennweite 25 mm. Die gleiche Nennweite weist das Mittelteil auf.

Das gesamte Medienabflußrohr (4) wird einerseits im Gehäuse (1) und zum anderen in einem mit dem Gehäuse (1) fest verbundenen, dichtenden Axiallager (21a) verstellbar geführt. Zur Einstellung des Medienabflußrohrs (4) ist das Axiallager (21a) mit einer Hilfseinrichtung, in diesem Fall einem Sechskant mit einer Standard-Schlüsselweite, versehen.

Am oberen Ende des Axiallagers (21a) befindet sich eine ortsfest mit diesem verbundene Verschraubung
(24), über welche die Vorrichtung mit dem Rohrleitungssystem des Nutzers verbunden ist.

Am unteren Ende des Gehäuses (1) befindet sich eine Zugabemedienzufluß (5). Dieser Zugabemedienzufluß (5) ist als axial verstellbares Röhrchen ausgebildet und ragt durch die Wand des Gehäuses (1) in den Hohlraum (2) und dort in die Lavaldüse (7) hinein. Zur Verhinderung von Rückschlägen ist die Zuleitung zum Zugabemedienzufluß (5) mit einem Rückschlagventil (14) versehen. Die Einstellung des Volumenstromes des Oxidationsmittels erfolgt über ein Feinregelventil (15a).

Zweckmäßigerweise wird auch hier als Oxidationsmittel Umgebungsluft verwendet, welche über eine regelbare Ionisationseinheit, die als Vorbehandlungseinrichtung (16b) dient, aufbereitet wird. Zum Erreichen des notwendigen Druckes wird eine Volumenstrompumpe (25) mit einem Nenndruck von 4 bar verwendet. Die gesamte Vorrichtung ist in einem eigenständigen Kreislauf an einem Speicherbehälter (23) mit freiem Auslauf (26), d.h. ohne Gegendruck auf der Ablaufseite, in das System installiert.

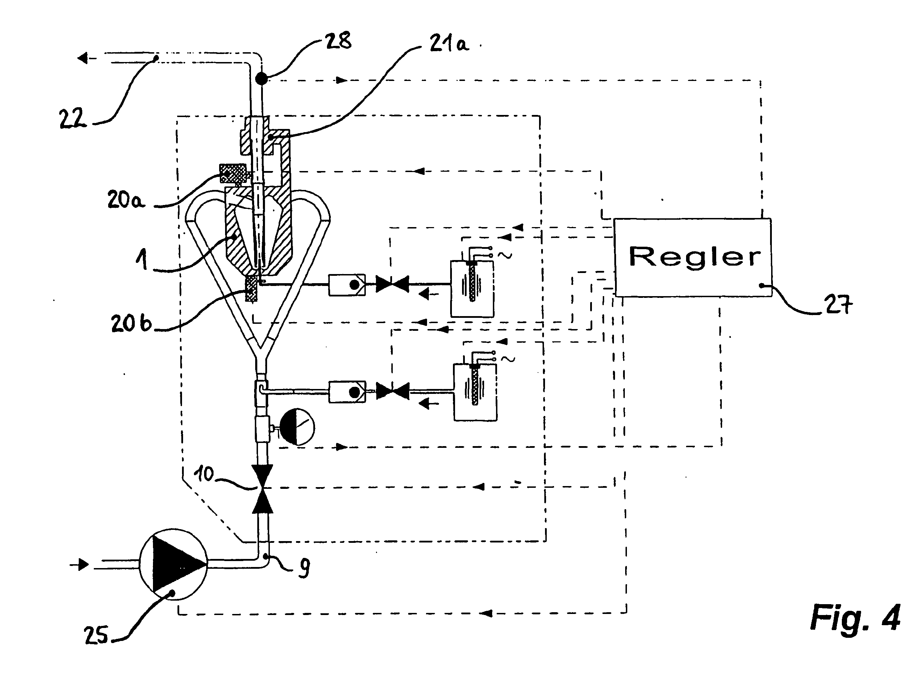

Fig. 4 zeigt eine weitere bevorzugte Ausführungsform der Erfindung. Dabei ist die erfindungsgmäße Vorrichtung um eine Regeleinrichtung (27) für den gesamten Reaktionsprozeß ergänzt. Der von der Strichpunktlinie umschlossene Bereich entspricht der Darstellung in Fig. 2. Aus Gründen der Übersichtlichkeit sind in Fig. 4 in diesem Bereich nicht alle Bestandteile der Vorrichtung mit Bezugszeichen versehen, es wird daher auf die entsprechenden Angaben in Fig. 2 verwiesen.

Dabei werden in der Hauptanschlußleitung (9) signifikante Meßdaten wie Volumenstrom, Strömungsgeschwindigkeit, Temperatur, pH-Wert, Redox-Wert, Keimzahl, Trübung und Druck des zu behandelnden Mediums, sowie Ionisationsgrad und Volumenstrom des Zugabemediums kontinuierlich aufgenommen. In der Abflußleitung (22) der Vorrichtung werden Daten zur Trübung, Medienzusammensetzung, Redox-Wert und Keimzahl aufgenommen und an die Regeleinrichtung (27) kontinuierlich weitergeleitet.

Innerhalb der Regeleinrichtung (27), die als Kaskadenregler ausgeführt ist, werden die aufgenommenen Meßdaten in einem Rechenalgorithmus auf der Grundlage chemischer Grundgesetze verarbeitet und entsprechende Stellgrößen an die externe Volumenstrompumpe (25), das Regelventil (10), das Feinregelventil (15a) der Medienzugabe in das Gehäuse (1), das Feinregelventil (15b) der Medienzugabe in die Hauptanschlußleitung (9), die Verstelleinheit (20a) des Medienabflußrohres (4), die Verstelleinheit (20b) des Zugabemedienzuflusses (5), die Vorbehandlungseinrichtung (16a) der Zugabemedienzuleitung zum Gehäuse (1) und die Vorbehandlungseinrichtung (16b) der Zugabemedienzuleitung zur Hauptanschlußleitung (9) ausgegeben.

Durch die Verwendung der Regeleinrichtung (27) kann der Staudruck entsprechend den gewünschten chemischen Reaktionen und Reaktionsprodukten frei nach einem vorgegebenen Algorithmus geregelt werden.

Über Meßwertaufnehmer (28) in der Abflußleitung (22) der Vorrichtung oder am Medienabflußrohr (4) oder an einem nachfolgenden Speicherbehälter (23) oder über Rückkopplung werden die entsprechenden Eingangsgrößen für eine Regelung ermittelt. Bei Regelprozessen dient als Führungsgröße das gewünschte Ergebnis der Reaktion über einen bestimmten Algorithmus aus bekannten chemischer Grundgesetzen und Vorrichtungskenngrößen oder ein Vergleichswert, welcher auch am Eingang der Regelstrecke erfaßt werden kann.

Anhand nachfolgender Ausführungsbeispiele werden das erfindungsgemäße Verfahren sowie die Funktionsweise der erfindungsgemäßen Vorrichtung näher erläutert.

### Ausführungsbeispiel 1

### Aufbereitung von Schmierölemulsionen

Im Maschinen- und Anlagenbau sowie der Metallfertigung werden oft in offenen Kreisläufen sogenannte Kühl- oder Schmierölemulsionen und -suspensionen verwendet. Dabei handelt es sich um Wasser-Öl-Gemische mit einem Öl-Anteil von 2-3%. Diese Schmierölemulsionen dienen einerseits zum Kühlen von offenen Lagern oder beispielsweise zum Kühlen und gleichzeitigen Schmieren bei zerspanenden Tätigkeiten wie Bohren oder Drehen.

Derartige Emulsionen oder Suspensionen bilden eine ausgezeichnete nährstoffhaltige Grundlage für Keime, Bakterien und Pilze, so daß sie nach kurzer Zeit durch Fäulnisprozesse angegriffen werden und eine extrem hohe Geruchsbelastung in den Fertigungsstätten darstellen. Um die Belastung so gering wie möglich zu halten, werden deshalb bisher den Emulsionen auch für den Menschen hochgiftige Biozide in geringen Mengen zudosiert. Im Ergebnis kann mit geringer Zufriedenstellung eine kurzzeitige Reduzierung (i.d.R. nur 3-5 Tage) der Belastung verzeichnet werden. Nachteilig ist, daß die so bekämpften Mikroorganismen lediglich abgetötet werden und ihre Überreste sich im Kreislauf sammeln, was wiederum die Nährstoffgrundlage für andere Keime und Bakterien darstellt, und sich durch Verwesungsprozesse zusätzliche chemische Belastungen in der Emulsion einstellen. Nachteilig ist ebenfalls, daß durch die notwendige häufige Erneuerung und Entsorgung der Emulsionen eine hohe Betriebskostenbelastung entsteht.

Durch den Einsatz der erfindungsgemäßen Vorrichtung in einem offenen Kreislauf wurden die Keimzahlen in den Emulsionen von 6.500.000 KBE (Keimbildende Einheiten) in nur zwei Stunden auf 500.000 KBE und die Geruchsbelastung durch vorhandene organische Verbindungen aus Fäulnisprozessen unter die Geruchsschwelle gesenkt. Die abgetöteten Keime sind auch als abgestorbene Restprodukte in der Emulsion nicht mehr nachweisbar. Zusätzlich wurde die Schmierleistung um 30 % verbessert. Eine Zugabe von Bioziden oder anderen Chemikalien war nicht mehr notwendig. Die Standzeit der Emulsion konnte um das 14-fache erhöht werden.

Dabei wurde die Vorrichtung in einem offenen Kreislauf betrieben. Aus dem Speicherbehälter der Schmierölemulsion wurde diese über eine Pumpe mit einer Förderleistung von 10 m³/h und einem Druck von 3,5 bar über einen Hauptzulaufdurchmesser von 34 mm kontinuierlich gepumpt. Aufgrund der geometrischen Verhältnisse im Hohlraum und dem Medienabflußrohr mit seinem geringsten Durchmesser im Bereich der Lavaldüse von 16 mm und in Verbindung mit den Förderleistungen der Pumpe wird ein entsprechender Stau- oder Reaktionsdruck im Gerät aufgebaut. Die hohe Strömungsgeschwindigkeit und Drehzahl des Volumenstromes im Gerät von über 60 Umdrehungen/s bewirkt eine mechanische Zerstörung vorhandener Organismen, so daß sich die Reaktionsoberfläche der organischen Verbindungen vergrößert. In Verbindung mit dem im Wasser gelösten und zusätzlich zugeführtem Luftsauerstoff wird im Hohlraum unter Druck der chemische Oxidationsprozeß initiiert und beschleunigt. Zusätzlich werden im Medienabflußrohr durch Zugabe von Luftsauerstoff in dem vorhandenen Wirbelfaden befindliche organische Verbindungen oxidiert. Nach dem Medienabflußrohr wird das behandelte Wasser wieder dem Speicherbehälter zugeführt.

### Ausführungsbeispiel 2

### Trinkwasserentkeimung

Trotz Behandlung von Trinkwasser bei Erzeugern bilden sich in den medienführenden Teilen beim Abnehmer Keim- und Bakteriennester, was zu einer Belastung des Trinkwassers u.a. mit gefährlichen Krankheitserregern führen kann. Eine sehr gefährliche Art von Keimen und Krankheitserregern in Trinkwassernetzen ist die Legionella Pneumophyla, gemeinhin die Legionelle. Um diese in Trinkwassernetzen abzutöten sind technisch außerordentlich aufwendige Maßnahmen notwendig. So wird das Wasser in den Netzen längere Zeit auf über 44°C erhitzt und gehalten, mitunter sogar bis 80 °C. Eine andere Form der Keimreduzierung nutzt technisch aufwendige Anlagen mit UV-Entkeimung. Allen bisherigen Anlagen eigen ist der technisch hohe Aufwand, die z. T. geringe Behandlungsleistung bezogen auf den Wasserdurchsatz, ein hohes Rückverkeimungsrisiko und hohe Betriebs- und Unterhaltungskosten.

Der Einsatz der erfindungsgemäßen Vorrichtung in einem geschlossenen Kreislauf führte zu einem Abbau der Legionellen von über 110 KBE (Keimbildende Einheiten) auf zunächst 7 KBE, dauerhaft 0 KBE. Eine Rückverkeimung in den Wassemetzen kann durch den ständigen oder intermittierenden Betrieb der Vorrichtung dauerhaft vermieden werden. Neben der Reduzierung der Keimzahlen, wobei diese auch nicht als abgestorbene Reste nachweisbar sind, findet durch die Änderung der Viskosität und der Oberflächenspannung eine Reinigung des gesamten Rohrnetzes dahingehend statt, daß auch andere oxidable Fremdstoffe abgebaut und mineralische Anlagerungen aufgrund der verbesserten Kapillareigenschaften des Wassers ausgespült werden. Es findet somit eine nachhaltige Sanierung des Rohr- und Trinkwassernetzes statt.

Im oben beschriebenen Fall wurde die Vorrichtung über einen Bypass druckseitig mit dem anstehenden Netzdruck von 4 bar beaufschlagt. Die Durchflußmenge lag bei 12 m3/h, der Hauptzulaufdurchmesser bei 34 mm und der geringste Durchmesser im Medienabflußrohr bei 16,8 mm. Damit war die notwendige hohe Strömungsgeschwindigkeit und Drehzahl im Hohlraum von 70 Umdrehungen/s für die mechanische Zerkleinerung der organischen Bestandteile und ein genügend großer Reaktionsdruck zum beschleunigten Abbau von Kohlenwasserstoffverbindungen, insbesondere Eiweißverbindungen und Aminen durch eine chemische Kaltoxidation mit dem im Wasser gelösten Luftsauerstoff, gegeben. Durch Zugabe von ionisiertem Luftsauerstoff über Selbstansaugung in den Wirbelfaden wurden letzte verbleibende Keimreste oxidiert.

Ausgangsseitig wurde das Wasser mittels einer der Vorrichtung nachgeschalteten Pumpe zur Überwindung des anstehenden Netzdrucks wieder dem Trinkwasserkreislauf zugeführt. Nach Abschluß einer Grundreinigung genügte ein zeitlich intermittierender Betrieb der Vorrichtung zum Aufrechterhalten eines stabilen keimfreien Zustandes des Trinkwassernetzes.

### Ausführungsbeispiel 3

### Wasseraufbereitung in Industriewaschanlagen

In der Industrie und dem Gewerbe werden sehr umfangreich verschiedenste Waschanlagen eingesetzt. Dabei handelt es sich von Fahrzeugwaschanlagen wie LKW- oder Bahnwaschanlagen bis hin zu Maschinen oder Teilereinigungsanlagen.

Um bei allen diesen Anlagen den gewünschten Reinigungseffekt am Produkt zu erreichen, sind große Mengen an Reinigungsmitteln, welche u.a. die Verringerung der Oberflächenspannung oder Viskosität bewirken und für den Reinigungsprozeß nutzen, notwendig. Neben der erforderlichen Nachbehandlung der Produkte durch Spülung mit Klarwasser sind diese Verfahren sehr kostenintensiv hinsichtlich Unterhaltung und Betrieb der Anlagen sowie der Entsorgung der Abprodukte. Der Verbrauch an Frischwasser ist aufgrund der begrenzten Reinigungswirkung dieser Verfahren sehr hoch. Zudem entstehen bei Mehrfachnutzung der Abwässer als Kreislaufwasser außerordentlich hohe Keimbelastungen durch Bakterien und Pilze von teilweise über 600.000 KBE (Keimbildende Einheiten), die zu Fäulnisprozessen im Wasser und damit verbunden zu Geruchsbelastungen von über 2.500 GE (Geruchseinheiten) führen.

Bislang wurde diese Keimbelastung durch Zugabe verschiedener chemisch oder chemisch-biologischer, meist hochgiftiger Produkte in geringer Dosierung geringfügig begrenzt. Eine deutliche Reduzierung der Reinigungsmittel war aufgrund der damit verbundenen Verringerung der Waschleistung nicht möglich.

Der Einsatz der erfindungsgemäßen Vorrichtung in einem offenen Kreislauf führte zu einer Reduzierung der Oberflächenspannung um mehr als 15%. Auch eine Verringerung der Viskosität um mehr als 15% und damit deutlich verbesserte Fließ- und Benetzungseigenschaften konnten nachgewiesen werden. Die Keimbelastung wurde nach zweistündigem Betrieb auf unter 50.000 KBE und die Geruchsbelastung auf unter 700 GE reduziert.

Eine Verbesserung der Waschleistung erfolgte dahingehend, daß in Verbindung mit der Verwendung von vollentsalztem Wasser auf Reinigungszusätze bei einer Teilewaschanlage vollständig verzichtet werden konnte.

Aufgrund der geringen Wasserumlaufmenge wird hier eine Anlage mit einem Maximaldurchsatz von 5 m³/h in einem offenen Kreislauf betrieben. Dabei wurde das Schmutzwasser über eine Pumpe aus dem Speicherbehälter angesaugt und über den Hauptzulauf von 25 mm Durchmesser der Vorrichtung zugeführt. Über einen Injektor wird der Reaktionskammer im Zulauf Luft, bei welcher der Sauerstoffanteil vorher durch eine entsprechende Anlage radikalisiert wurde, zugeführt. Durch den anstehenden Förderpumpendruck mit 3 bar, den geometrischen Verhältnissen im Hohlraum, dem Zulauf mit 25 mm sowie dem Medienabflußrohr, welches im verjüngten Bereich einen Durchmesser von 9,8 mm aufweist und auf 25 mm erweitert wird, werden die notwendigen Reaktionsparameter erreicht. Das Wasser erreicht im Hohlraum eine Drehzahl von über 80 Umdrehungen/s, der Reaktionsdruck liegt bei über 2 bar.

Durch die hohe Rotationsgeschwindigkeit, die damit verbundenen Zentrifugalkräfte und durch Reibung wurden organische Bestandteile zerstört und unmittelbar unter den vorbezeichneten Reaktionsbedingen durch die vorhandenen Sauerstoffradikale oxidiert. Als Reaktionsprodukte liegen bei Kohlenwasserstoffverbindungen CO₂ und H₂O vor.

Die hohen Zentrifugal- sowie Scherkräfte im System bewirken eine Änderung der Struktur der Nebenvalenzbindungen des Wassers dahingehend, daß sich die Wassermoleküle unter Änderung der Viskosität und Oberflächenspannung neu ordnen. Die Oberflächenspannung wurde um mehr als 15% von 0,073 N/m auf 0,062 N/m herabgesetzt.

Im Anschluß an die Hauptreaktion wird dem Wirbelkern im Medienabflußrohr zur Förderung der Nachreaktion Luft zugegeben. Durch Unterschreiten des Dampfdruckes hinter der Lavaldüse im Medienabflußrohr geht ein Teil des Wassers in die Dampfphase über und mischt sich mit dem zugegebenen Luftsauerstoff, was zu einer Verbesserung der Nachreaktion durch Oxidation im gasförmigen Wirbelfaden um mehr als 100% führt.

### Ausführungsbeispiel 4

### Vorbehandlung industrieller Abwässer

Industrielle Abwässer sind mit kommunalen Abwässern nicht zu vergleichen. Insbesondere die prozeßbedingten chemischen Abprodukte, die den CSB-Wert (chemischer Sauerstoffbedarf) stark anheben, machen technisch aufwendige und teure Anlagen zur Senkung dieser Werte notwendig. Die im Abwasser enthaltenen Abprodukte umfassen u.a. den gesamten Bereich der organischen chemischen Substanzen von Kettenverbindungen bis zu Ringverbindungen. Die Belastungen der Abwässer erreichen nicht selten CSB-Werte von 500 bis über 100.000 und können konzentriert in dieser Größenordnung herkömmlichen biologischen Kläranlagen nicht zugeführt werden.

Die Nutzung der erfindungsgemäßen Vorrichtung führte innerhalb von 3 Stunden zu einer Senkung der CSB-Werte von 2.400 auf unter 330, so daß dieses Industrieabwasser einer weiteren Behandlung durch biologische Prozesse zugeführt werden konnte.

Verwendet wurde hierfür eine Anlage mit einer Behandlungsleistung von 40 m³/h, einem Hauptzulauf von 40 mm und einem Medienabflußrohr, dessen geringster Durchmesser im Bereich der Lavaldüse bei 23 mm lag. Der pumpenseitig aufgebrachte Förderdruck lag bei 8 bar und die Drehzahl des Fluids im Hohlraum bei über 110 Umdrehungen/s. Damit lag ein genügend großer Reaktionsdruck für Oxidationen von Aromaten und Estern vor. Zur Beschleunigung und Verbesserung sowie Initiierung des Oxidationsprozesses wurden dem Fluid im Zulauf Luft, deren Sauerstoffanteil vorher zu Ozon radikalisiert wurde, zugegeben. Zusätzlich erfolgte eine Temperaturerhöhung des Fluids vor und im Hohlraum. Die Temperaturerhöhung um jeweils 10 K verdoppeltedie Reaktionsgeschwindigkeit.

Auf Grundlage dieser Reaktionsbedingungen erfolgten im Hohlraum chemische Oxidationsprozesse der Kohlenwasserstoffverbindungen mit dem vorhandenen Ozon und atomaren Sauerstoff. Eine Nachbehandlung des Fluids in Form einer Fortführung des Prozesses der Oxidation erfolgte innerhalb des Medienabflußrohrs im Wirbelfaden durch die erneute Zugabe von Ozon. Diesem Prozeß förderlich war das Unterschreiten des Dampfdruckes des Fluids im Wirbelkern und damit sein teilweise gasförmiger Zustand. Im Ergebnis dieser Reaktionen entstanden aus den Kohlenwasserstoffverbindungen vorrangig CO₂, welches nach dem freien Auslauf ausgaste, H₂O sowie in kleinen Mengen nicht mehr oxidierbare Salze und schwer oxidierbare Reste an Kohlenwasserstoffverbindungen.

### Ausführungsbeispiel 5

### Vorbehandlung kommunaler Abwässer

Kommunale Abwässer werden in Kläranlagen so aufbereitet, daß neben dem geklärten Abwasser als Abprodukt eine hohe Menge an nicht mehr verwertbarem Klärschlamm anfällt. Dieser Klärschlamm muß zur Entsorgung aufwendig eingedickt werden und anschließend auf Deponien, zur Verbrennung in entsprechende Anlagen oder in Einzelfällen zur Düngung auf landwirtschaftliche Nutzflächen verbracht werden. Aufwendig sind derartige Verfahren durch den hohen Anfall an Klärschlämmen und deren teilweise gesundheitlich stark belastende Zusammensetzung.

Mit der erfindungsgemäßen Vorrichtung wurden derartige Schlämme, welche aus Einzelflocken bestehen, so behandelt, daß diese organischen Bestandteile bis zu 98% optisch nicht mehr sichtbar zerkleinert wurden. Der Schlammaufschlußgrad ermittelt sich dabei aus der Sauerstoffverbrauchsrate und ergab einen Aufschluß der Schlammflocken von über 70 % bis 98 % nach zweistündiger Behandlung. Der in Folge nach mehreren Behandlungen um über 50 % gesenkte BSB- und CSB-Wert erreichte die für die Umwelt verträglichen und zugelassenen Werte, um dieses so behandelte Wasser direkt wieder in die Natur einleiten zu können.

Die verwendete Vorrichtung wurde dabei in einem offenen Kreislauf betrieben, d.h. aus einem Speicherbecken wurde über eine starke Pumpe mit einer Leistung von über 4 bar und einem Fördervolumen von max. 80 m³/h das noch pumpfähige Schlammwasser der Vorrichtung zugeführt. Dem Volumenstrom wurde vor Erreichen des Hohlraumes Außenluft, deren Sauerstoffanteil durch eine entsprechende Vorbehandlung zu Ozon radikalisiert und ionisiert war, zugegeben.

Mit einer Hauptzulaufnennweite und der gewählten geometrischen Form des Hohlraumes der Vorrichtung wurde im Maximum eine Drehzahl von über 150 Umdrehungen/s erreicht, wodurch das Schlammgemisch einer sehr hohen mechanischen Belastung, Reibung und Zentrifugalkraft ausgesetzt war. Diese Belastung zerstörte mechanisch die Schlammflocken, Bakterien und Keime und erhöhte deren Reaktionsoberfläche, so daß eine beschleunigte Oxidation mit dem beigegebenen Luftsauerstoff und Ozon vorrangig zu CO₂ und H₂O stattfand.

Die Reaktion fand unter Umgebungstemperatur und hohem Druck, welcher sich aus den geometrischen Verhältnissen im Hohlraum und den Zulaufnennweiten ergibt, statt. Im Medienabflußrohr, welches im engsten Querschnitt einen Durchmesser von 24 mm aufweist und sich auf 41 mm erweitert, wurde zusätzlich gleichfalls behandelter Luftsauerstoff dem Wirbelkern beigemischt, wodurch eine Nachreaktion in Form von Oxidationsprozessen stattfand und damit ein verbesserter Wirkungsgrad der Vorrichtung erreicht wurde. Nach dem Medienabflußrohr wurde das so behandelte Wasser druckfrei wieder dem Speicherbehälter zugeführt.

### Ausführungsbeispiel 6

### Vorbehandlung von Kraft- und Brennstoffen auf Basis pflanzlicher Öle

Flüssige Kraft- und Brennstoffe, insbesondere pflanzliche Öle wie Raps- oder Sonnenblumenöl, sind für die Verwendung in modernen Verbrennungsmotoren in ihrer ursprünglichen Form nicht geeignet. Grund hierfür sind chemische Verbindungen, welche zur Verharzung neigen sowie insbesondere die hohe Zähigkeit und Viskosität, die eine Förderung zum Verbrennungsraum nahezu unmöglich machen. Auch herkömmliche Kraftstoffe auf Erdölbasis müssen sinnvoll aufbereitet werden.

Bei der Aufbereitung der aus Pflanzen gewonnenen Öle, insbesondere Rapsöl, für die Verwendung als Brennstoff, werden diesen zur Verdünnung und Bindung von für die Verbrennung unerwünschten chemischen Verbindungen "Verdünner" oder Verflüssiger wie beispielsweise Methylverbindungen beigemischt. So aufbereitet können diese Öle als Kraftstoff für Dieselmotoren bedingt verwendet werden. Eine andere Form der Verflüssigung besteht darin, diese Kraftstoffe vor dem Brennraum durch Erwärmung in ihrer Viskosität zu senken, d.h. fließfähiger zu gestalten.

Durch die Behandlung dieser Pflanzenöle mit der erfindungsgemäßen Vorrichtung ergab sich im Gegensatz zu bisherigen Verfahren eine dauerhafte Viskositätsänderung und damit Verflüssigung, die auch bei Temperaturen unter 0°C Bestand hatte. Im Vergleich zum Ausgangsprodukt wurde das Fließverhalten um ca. 50 - 70 % verbessert. Organische chemische Verbindungen, welche ursprünglich in Kanälen und Zuleitungen zu Eindickungen und Verharzungen führten, waren nicht mehr nachzuweisen, d.h. die Zuleitungen waren auch nach längerem Betrieb inkrustationsfrei. Der Brennwert des so behandelten Pflanzenöles verringerte sich gegenüber dem Ausgangszustand dabei nicht. Es fand durch die bessere Viskosität eine deutlich bessere Luft-Brennstoffmischung statt.

Erreicht wurde dies durch Zuschalten der Vorrichtung als offener Kreislauf zu einem Speicherbehälter für Pflanzenöle. Dabei wurde das Ölvolumen zum Erreichen der gewünschten Viskosität mindestens 20 mal mit der Vorrichtung behandelt. Als Ausgangsmaß für die Behandlung ist die Behandlungsleistung der Vorrichtung mit 20 m³/h definiert.

Das Öl wurde mit einer leistungsstarken Pumpe von über 6 bar über den Hauptzulauf unter Beimengung ionisierten oder radikalisierten Luftsauerstoffs dem Hohlraum der Vorrichtung zugeführt. Eine zusätzliche Temperaturerhöhung um mindestens 10 K verbesserte nachfolgende Oxidationsprozesse von unerwünschten chemischen Begleitstoffen und erhöhte die Reaktionsgeschwindigkeit um über 100 %. Durch die geometrischen Verhältnisse im Hohlraum, dem Zulauf mit 40 mm und dem Medienabflußrohr mit seinem in der Lavaldüse auf 12 mm verjüngten Durchmesser, der sich ausgangsseitig auf 28 mm erweitert, werden Drehzahlen des Fluids im Hohlraum von über 180 Umdrehungen/s sowie ein hoher Reaktionsdruck für die ablaufenden Oxidationsprozesse erreicht. Die damit verbundenen hohen Reibungs-, Scher- und Zentrifugalkräfte bewirken eine Neuordnung der Molekülstruktur des Öles dahingehend, daß sich die Viskosität und damit das Fließverhalten dauerhaft um mindestens 50% verbessert. Chemische organische Fremdstoffe, die durch Einlagerung in die Molekülstruktur diese ungünstig in Richtung höherer Zähigkeit beeinflussen könnten, werden gleichzeitig durch die vorhandenen Reaktionsbedingungen vorrangig zu CO₂ und H₂O oxidiert. Dieser Oxidationsprozeß wird im Medienabflußrohr im Wirbelfaden unter Beimengung von ebenfalls behandelter Luft fortgesetzt und ergänzt. Ausgangsseitig wird das behandelte Öl druckfrei dem Speicherbehälter wieder zugeführt.

### Bezugszeichenliste

1 Gehäuse
2 Hohlraum
3 Medienzufluß
4 Medienabflußrohr
5 Zugabemedienzufluß
6 Zulaufrohr
7 Lavaldüse
8 Rohrförmiger Zapfen
9 Hauptanschlußleitung
10 Regelventil
11 Meßwertaufnehmer
12 Ausgabeeinheit
13 Zugabeeinrichtung
14 Rückschlagventil
15a Feinregelventil der Zugabemedienzuleitung zum Gehäuse
15b Feinregelventil der Zugabemedienzuleitung zur Hauptanschlußleitung
16a Vorbehandlungseinrichtung der Zugabemedienzuleitung zum Gehäuse
16b Vorbehandlungseinrichtung zur Hauptanschlußleitung
17 Kompressoreinrichtung
18 Strömungsteiler
19 Schaurohr
20a Verstelleinheit des Medienabflußrohres
20b Verstelleinheit des Zugabemedienzuflusses
21a Axiallager des Medienabflußrohres
21b Axiallager des Zugabemedienzuflusses
22 Abflußleitung
23 Speicherbehälter
24 Verschraubung
25 Volumenstrompumpe
26 Freier Auslauf
27 Regeleinrichtung
28 Meßwertaufnehmer

## Patentansprüche

1. Verfahren zur physikalisch-chemischen Behandlung fluider Medien, **dadurch gekennzeichnet, dass** mindestens zwei Volumenströme des zu behandelnden fluiden Mediums in ein Gehäuse mit einer rotationssymmetrischen, im Längsschnitt herzförmigen Reaktionskammer mit sich vom oberen Medienzufluss zum unteren Medienabfluss verkleinernden Querschnitt und einem axial von oben verstellbaren, bis fast an das untere Ende der Reaktionskammer reichenden Abflussrohr, welches in seinem mündungsnahen Bereich als Lavaldüse ausgestaltet ist, über mindestens zwei tangential zur Mantelfläche der Reaktionskammer angeordnete Zuflussöffnungen mit nach unten fallender Einströmrichtung mit hoher Geschwindigkeit in Form einer Translations- und Rotationsbewegung so zwangsgeführt werden, dass sich strömungstechnisch eine turbulente Grenzschicht ausbilden kann, dass die Volumenströme zueinander eine hohe Geschwindigkeitsdifferenz aufweisen, dass eine hohe Reibung zwischen beiden Schichten sowie hohe Zentrifugalkräfte in den einzelnen Volumenströmen entstehen und dass am unteren Ende der Reaktionskammer die in fallender Schraubenlinie fließende Strömung zum Zentrum der Strömung in eine aufsteigende Richtung umgelenkt wird.

2. Verfahren nach Anspruch 1, **dadurch gekennzeichnet, dass** die Volumenströme durch Trennung aus einem Zulauf erzeugt werden oder als getrennte Volumenströme aus unterschiedlichen Medien zugegeben werden.

3. Verfahren nach Anspruch 1 oder 2, **dadurch gekennzeichnet, dass** Oxidationsmittel mitgeführt oder zugegeben werden.

4. Verfahren nach einem der Ansprüche 1 bis 3, **dadurch gekennzeichnet, dass** die Strömungsgeschwindigkeit so gewählt ist, dass bei Rotationsbewegung die auftretende Zentrifugalkraft so groß ist, dass die Nebenvalenzbindungen der Moleküle des fluiden Mediums mindestens kurzfristig aufgebrochen werden oder/und langkettige Moleküle organischer oder/und anorganischer Stoffe oder/und Mikroorganismen mechanisch zerstört werden oder/und Moleküle des Mediums oder/und mitgeführter Stoffe ionisiert oder radikalisiert werden.

5. Verfahren nach jeweils einem der Ansprüche 1 bis 4, **dadurch gekennzeichnet, dass** die Strömungsgeschwindigkeit so gewählt ist, dass bei Translationsoder/und Rotationsbewegung die auftretende Zentrifugalkraft oder/und Translationskraft eine geometrische Neuausrichtung der einzelnen Moleküle aufgrund deren unterschiedlicher Atommassen und somit deren Masseträgheit bewirkt.

6. Verfahren nach jeweils einem der Ansprüche 1 bis 5, **dadurch gekennzeichnet, dass** Volumenstrom- oder/und Rotationsgeschwindigkeit so gewählt werden, dass eine Stofftrennung der mitgeführten Stoffe oder Stoffverbindungen und des fluiden Mediums in jedem einzelnen Volumenstrom erreicht wird.

7. Verfahren nach jeweils einem der Ansprüche 1 bis 6, **dadurch gekennzeichnet, dass** durch die Neuordnung der Molekülgitterstruktur flüchtige Fremdstoffe oder Gase aus dieser Gitterstruktur gelöst und freigesetzt werden, so dass im fluiden Medium eine Entgasung stattfindet.

8. Vorrichtung zur physikalisch-chemischen Behandlung fluider Medien, bestehend aus einem Gehäuse mit einer rotationssymmetrischen, im Längsschnitt herzförmigen Reaktionskammer mit sich vom oberen Medienzufluss zum untern Medienabfluss verkleinernden Querschnitt und einem axial von oben verstellbaren, bis fast an das untere Ende der Reaktionskammer reichenden Abflussrohr, welches in seinem mündungsnahen Bereich als Lavaldüse ausgestaltet ist, mindestens einem tangential zur Mantelfläche der Reaktionskammer mit nach unten fallender Einströmrichtung angeordnetem Zufluß für das zu behandelnde Medium und insbesondere mit einem Zufluss für ein Zugabemedium.

9. Vorrichtung nach Anspruch 8, **dadurch gekennzeichnet, dass** die kleinste Querschnittsfläche des Abflussrohrs bzw. der darin integrierten Lavaldüse höchstens 0,7mal so groß ist wie die Summe der Querschnittsflächen aller Medienzuflüsse.

10. Vorrichtung nach einem der Ansprüche 8 oder 9, **dadurch gekennzeichnet, dass** das in die Reaktionskammer ragende Abflussrohr aus mehreren Teilen besteht, wovon der obere, aus dem Gehäuse ragende Teil als Schaurohr ausgeführt ist, das aus durchsichtigem Material besteht.

11. Vorrichtung nach einem der Ansprüche 8 bis 10, **dadurch gekennzeichnet, dass** das zu behandelnde Medium vor oder in der Kammer auf eine definierte Reaktionstemperatur gebracht werden kann.

12. Vorrichtung nach einem der Ansprüche 8 bis 11, **dadurch gekennzeichnet, dass** medienführende Bestandteile der Vorrichtung mit katalytisch wirkenden Stoffen beschichtet oder aus katalytisch wirkenden Stoffen hergestellt sind.

13. Vorrichtung nach einem der Ansprüche 8 bis 12, **dadurch gekennzeichnet, dass** der oder die Medienzuflüsse im oberen Bereich der Reaktionskammer tangential zur Kammerwand münden, wobei ihre Längsachsen mit der Symmetrieachse der Reaktionskammer einen Winkel von weniger als 90° und mehr als 45° einschließen, so dass das Medium mit fallender Eintrittsrichtung in die Reaktionskammer tritt.

14. Vorrichtung nach einem der Ansprüche 8 bis 13, **dadurch gekennzeichnet, dass** in die Hauptanschlussleitung eine Zugabeeinrichtung integriert ist, mittels derer das zu behandelnde Medium vor dem Eintritt in die Reaktionskammer mit einem Zugabemedium angereichert wird.

15. Vorrichtung nach einem der Ansprüche 8 bis 14, **dadurch gekennzeichnet, dass** eine oder mehrere Vorbehandlungseinrichtuagen peripher so angeordnet sind, dass das Zugabemedium vor der Einspeisung ionisiert oder/und zu einem Radikal umgewandelt wird.

16. Vorrichtung nach einem der Ansprüche 8 bis 15, **dadurch gekennzeichnet, dass** das Abflussrohr und der Medienzufluss durch entsprechende Ausbildung von Hilfseinrichtungen wie Sackbohrungen, Rändelring oder Schlüsselweiten einfach per Hand gestellt weiden können.

17. Vorrichtung nach einem der Ansprüche 8 bis 16, **dadurch gekennzeichnet, dass** das Medienabflussrohr und der Zugabemedienzufluss mittels Verstelleinrichtungen bei laufendem Betrieb in axialer Richtung verstellbar und in ihrer Lage fixierbar sind, wobei die Schnittstellen zwischen dem Gehäuse und dem peripheren Leitungssystem ortsunveränderlich bleiben.

18. Vorrichtung nach einem der Ansprüche 8 bis 17, **dadurch gekennzeichnet, dass** das Ablaufrohr durch eine mechanische, elektrische, hydraulische oder pneumatische Stelleinheit verstellt werden kann.

19. Vorrichtung nach einem der Ansprüche 8 bis 18, **dadurch gekennzeichnet, dass** bei Verwendung mehrerer Medienauflüsse diese aus einer Hauptanschlussleitung gespeist werden, wobei zur Teilung des Volumenstroms ein oder mehrere Strömungsteiler in Y-Form verwendet werden deren ablaufseitige Schenkel einen Winkel von weniger als 180° einschließen.

20. Vorrichtung nach einem der Ansprüche 8 bis 19, **dadurch gekennzeichnet, dass** die Zugabeleitungen für Zugabemedien gegen ungewollten Eintritt des zu behandelnden Mediums durch Rückschlagventile gesichert sind.

21. Vorrichtung nach Anspruch 20, **dadurch gekennzeichnet, dass** die Rückschlagventile über einen Öffnungsdruck von weniger als 0,55 bar verfügen.

22. Vorrichtung nach einem der Ansprüche 8 bis 21, **dadurch gekennzeichnet, dass** die Zugabeleitungen für Zugabemedien zur Dosierung des Zugabemediums mit Regelventilen ausgestattet sind.

23. Vorrichtung nach einem der Ansprüche 8 bis 22, **dadurch gekennzeichnet, dass** zu- oder/und ablaufscitig Messeinrichtungen installiert sind, welche kontinuierlich oder diskontinuierlich prozessrelevante Messwerte aufnehmen und als analoges oder digitales Signal für nachgeschaltete Auswerteeinheiten zur Verfügung stellen oder/und anzeigen.

24. Vorrichtung nach einem der Ansprüche 8 bis 23, **dadurch gekennzeichnet, dass** die den Prozess bestimmenden Parameter aufgrund prozessrelevanter Messwerte mittels einer Mess-, Steuer- und Regelungseinrichtung über entsprechende Stellglieder beeinflusst werden.

## Claims

1. Process for the physical-chemical treatment of fluid mediums **characterized by** that at least two volume flows of the fluid medium to be treated are positively guided into a casing with a rotationally symmetric reaction chamber, which is heart-shaped in longitudinal view and is provided with a cross-section that reduces from the top medium inflow to the bottom medium outflow and a discharge pipe axially adjustable from top reaching to approximately the lower end of the reaction chamber, said discharge pipe in the region near to its outflow opening established as a Laval nozzle, through at least two inflow openings arranged tangentially to the circumferential surface of the reaction chamber with a downwards falling inflow direction at high velocity in form of a translational and rotational motion such that a turbulent boundary layer can develop, the volume flows have a big velocity difference to each other, great friction between both layers and high centrifugal forces in each volume flow develop and at the lower end of the reaction chamber the flow flowing on a falling helical line to the centre of the flow is reversed into rising direction.

2. Process to claim 1 **characterized by that** the volume flows are produced by separation from one inflow or fed from different mediums as separate volume flows.

3. Process to claim 1 or 2 **characterized by that** oxidants are carried or added.

4. Process to one of the claims 1 to 3 **characterized by** that the flow velocity is chosen such that on rotational motion the occurring centrifugal force is such a magnitude that the secondary valency bonds of the molecules are broken at least for a short period of time or/and long-chain molecules of organic or/and inorganic substances or/and microorganisms are mechanically destroyed or/and molecules of the medium or/and entrained substances are ionized or radicalised.

5. Process to any of the claims 1 to 4 **characterized by** that the flow velocity is chosen such that on translational or/and rotational motion the occurring centrifugal force or/and translational force causes the various molecules to become geometrically realigned due to their different atomic masses and, hence, their inertia.

6. Process to any of the claims 1 to 5 **characterized by that** the volume flow- or/and rotational velocity are chosen such that separation of the carried substances or compounds and the fluid medium is reached in each single volume flow.

7. Process to any of the claims 1 to 6 **characterized by** that due to the realignment of the molecular lattice structure, volatile foreign substances or gases are released and removed from said lattice structure so that degasing occurs in the fluid medium.

8. Device for the physical-chemical treatment of fluid mediums, the device including a casing with a rotationally symmetric reaction chamber, which is heart-shaped in longitudinal view and is provided with a cross-section that reduces from the top medium inflow to the bottom medium outflow and a discharge pipe axially adjustable from top reaching to approximately the lower end of the reaction chamber, said discharge pipe in the region near to its outflow opening established as a Laval nozzle, at least one inflow for the medium to be treated arranged tangentially to the circumferential surface of the reaction chamber with a downwards falling inflow direction, and particularly, with an inflow for an added medium.

9. Device to claim 8 **characterized by** that the smallest cross-sectional area of the discharge pipe, or the Laval nozzle integrated therein, respectively, is 0.7 maximum times the sum of the cross-sectional areas of all medium inflows.

10. Device to one of the claims 8 or 9 **characterized by** that the discharge pipe which protrudes into the reaction chamber consists of several parts, whereby the upper part of the discharge pipe is designed as inspection pipe made of transparent material.

11. Device to any of the claims 8 to 10 **characterized by that** the medium to be treated can be brought to a defined reaction temperature before or in the chamber.

12. Device to any of the claims 8 to 11 **characterized by that** medium-contacting component parts of the device are coated with or made of substances acting as catalysts.

13. Device to any of the claims 8 to 12 **characterized by** that the medium inflow(s) in the upper region of the reaction chamber enter tangentially to the chamber wall, whereby the longitudinal axes of them include an angle of less than 90° and more than 45° to the axis of symmetry of the reaction chamber so that the medium enters into the reaction chamber in a falling inflow direction.

14. Device to any of the claims 8 to 13 **characterized by** that an admixing means is integrated into the main connection line, the admixing means functioning to enrich the medium to be treated with an additional medium prior to inflow into the reaction chamber.

15. Device to any of the claims 8 to 14 **characterized by** that one or several preprocessing means are arranged peripherally such that the additional medium is ionized or/and transformed into a radical before it is added.

16. Device to any of the claims 8 to 15 **characterized by that** the discharge pipe and the medium inflow can easily be set manually because of the corresponding provision of auxiliary means such as blind holes, knurled ring or wrench opening.

17. Device to any of the claims 8 to 16 **characterized by** that the medium discharge pipe and the added medium inflow during operation are adjustable in axial direction and fixable in their positions by means of adjusting means.

18. Device to any of the claims 8 to 17 **characterized by** that the discharge pipe can be adjusted by means of a mechanical, electrical, hydraulic or pneumatic adjusting unit.

19. Device to any of the claims 8 to 18 **characterized by that** when several medium inflows are used these medium inflows are fed from a main connection line, whereby for the separation of the volume flow one or several Y-shaped flow separators are used, the outflow-side legs of which include an angle of less than 180°.

20. Device to any of the claims 8 to 19 **characterized by** that the admixture lines for added mediums are secured from accidental inflow of the medium to be treated by non-return valves.

21. Device to claim 20 **characterized by** that the non-return valves have an opening pressure of less than 0.55 bar.

22. Device to any of the claims 8 to 21 **characterized by** that the admixture lines for added mediums are equipped with control valves for the metering of the added medium.

23. Device to any of the claims 8 to 22 **characterized by** that measuring means are provided on the inflow or/and outflow sides which continuously or discontinuously sense process-relevant measurement values and make available or/and indicate said measurement values as analogue or digital signals to evaluation units arranged afterwards.

24. Device to any of the claims 8 to 23 **characterized by** that the parameters controlling the process are influenced based on process-relevant measurement values by means of a measurement and control apparatus through corresponding control elements.

## Revendications

1. Procédé pour le traitement physico-chimique de milieux fluides, **caractérisé en ce qu'**au moins deux courants volumiques de milieu fluide à traiter sont guidés sous contrainte dans un boîtier pourvu d'une chambre de réaction symétrique en rotation, de section longitudinale cardioïde et dont la section transversale se rétrécit depuis l'admission supérieure du milieu jusqu'à l'évacuation inférieure du milieu, d'un tuyau d'évacuation axialement réglable par le haut, atteignant pratiquement l'extrémité inférieure de la chambre de réaction et réalisé dans la zone proche de son embouchure sous forme d'une tuyère de Laval, par l'intermédiaire d'au moins deux orifices d'entrée disposés tangentiellement à la surface d'enveloppe de la chambre de réaction avec une direction d'alimentation descendant vers le bas, à grande vitesse sous forme d'un mouvement de translation et de rotation, de telle sorte qu'une interface turbulente peut se former sur le plan de la technique des fluides, que les courants volumiques présentent entre eux une grande différence de vitesse, qu'il est produit une forte friction entre les deux liquides, ainsi que des forces centrifuges élevées au sein de chacun des courants volumiques respectifs, et qu'au niveau de l'extrémité inférieure de la chambre de réaction le courant s'écoulant en descendant de façon hélicoïdale par rapport au centre du courant est dévié dans le sens ascendant.

2. Procédé selon la revendication 1, **caractérisé en ce que** les courants volumiques sont produits par séparation depuis une arrivée ou sont ajoutés sous forme de courants volumiques séparés issus de différents milieux.

3. Procédé selon la revendication 1 ou 2, **caractérisé en ce que** des agents oxydants sont entraînés conjointement ou rajoutés.

4. Procédé selon l'une des revendications 1 à 3, **caractérisé en ce que** la vitesse de l'écoulement est choisie de sorte que, lors du mouvement de rotation, la force centrifuge générée est forte au point de rompre au moins à court terme les liaisons de valence secondaire des molécules du milieu fluide et/ou de détruire mécaniquement les molécules à chaîne longue des substances organiques et/ou inorganiques et/ou les microorganismes et/ou d'ioniser ou de radicaliser les molécules du milieu et/ou des matières entraînées conjointement.

5. Procédé selon l'une quelconque des revendications 1 à 4, **caractérisé en ce que** la vitesse d'écoulement est choisie de sorte que, lors du mouvement de translation et/ou de rotation, la force centrifuge et/ou la force de translation produite provoque une réorientation géométrique des molécules individuelles en raison de leurs différentes masses atomiques et donc de leur inertie de masse.

6. Procédé selon l'une quelconque des revendications 1 à 5, **caractérisé en ce que** la vitesse du courant volumique et/ou la vitesse de rotation sont choisies de sorte qu'une produit une séparation de matière entre les matières ou les compositions de matières entraînées et le milieu fluide dans chaque courant volumique individuel est atteinte.

7. Procédé selon l'une quelconque des revendications 1 à 6, **caractérisé en ce que**, du fait de la réorganisation de la structure cristalline des molécules, les impuretés ou les gaz volatil(e)s provenant de cette structure cristalline sont dissout(e)s ou libéré(e)s, si bien qu'il se produit un dégagement gazeux dans le milieu fluide.

8. Dispositif pour le traitement physico-chimique de milieux fluides, composé d'un boîtier pourvu d'une chambre de réaction symétrique en rotation, de section longitudinale cardioïde et dont la section transversale se rétrécit depuis l'admission supérieure du milieu jusqu'à l'évacuation inférieure du milieu, d'un tuyau d'évacuation axialement réglable par le haut, atteignant pratiquement l'extrémité inférieure de la chambre de réaction et réalisé dans la zone proche de son embouchure sous forme d'une tuyère de Laval, et d'au moins un orifice d'entrée disposé tangentiellement à la surface d'enveloppe de la chambre de réaction avec une direction d'alimentation descendant vers le bas pour le milieu à traiter et en particulier d'un orifice d'entrée pour un milieu d'addition.

9. Dispositif selon la revendication 8, **caractérisé en ce que** l'aire de la section transversale minimum du tuyau d'évacuation ou encore de la tuyère de Laval intégrée à celui-ci est au plus 0,7 fois supérieure à la somme des aires de section transversale de toutes les arrivées de milieux.

10. Dispositif selon l'une des revendications 8 ou 9, **caractérisé en ce que** le tuyau d'évacuation qui dépasse dans la chambre de réaction se compose de plusieurs parties, parmi lesquelles la partie supérieure dépassant du boîtier est réalisée sous la forme d'un tuyau de visite ou de regard fabriqué dans un matériau transparent.

11. Dispositif selon l'une des revendications 8 à 10, **caractérisé en ce que** le milieu à traiter peut être amené à une température de réaction définie avant la chambre de réaction ou dans celle-ci.

12. Dispositif selon l'une des revendications 8 à 11, **caractérisé en ce que** les éléments du dispositif servant à guider ou transporter les milieux sont revêtus de matières catalytiquement actives ou sont fabriqués dans des matériaux catalytiquement actifs.

13. Dispositif selon l'une des revendications 8 à 12, **caractérisé en ce que** l'arrivée ou les arrivées de milieux débouchent dans la zone supérieure de la chambre de réaction sur un plan tangentiel à la paroi de la chambre, leurs axes longitudinaux englobant avec l'axe de symétrie de la chambre de réaction un angle inférieur à 90° et supérieur à 45°, de sorte que le milieu pénètre dans la chambre de réaction avec une direction d'entrée descendante.

14. Dispositif selon l'une des revendications 8 à 13, **caractérisé en ce qu'**un dispositif d'addition est intégré à la conduite de raccordement principale, qui vient enrichir avec un milieu d'addition le milieu à traiter avant l'entrée dans la chambre de réaction.

15. Dispositif selon l'une des revendications 8 à 14, **caractérisé en ce qu'**un ou plusieurs dispositifs de prétraitement est ou sont disposé(s) en périphérie de sorte que le milieu d'addition est ionisé et/ou transformé en un radical avant d'être injecté.

16. Dispositif selon l'une des revendications 8 à 15, **caractérisé en ce que** le tuyau d'évacuation et l'alimentation en milieux peuvent être facilement mis en place à la main en réalisant de façon appropriée des dispositifs auxiliaires tels que des trous borgnes, une bague moletée ou des surpans ou surplats.

17. Dispositif selon l'une des revendications 8 à 16, **caractérisé en ce que** le tuyau d'évacuation des milieux et l'alimentation en milieu d'addition peuvent être déplacés dans le sens axial en cours de fonctionnement par des dispositifs de déplacement ou de réglage et être fixés en position, les points de jonction entre le boîtier et le système de conduite périphérique demeurant ce faisant indéplaçables.

18. Dispositif selon l'une des revendications 8 à 17, **caractérisé en ce que** le tuyau de décharge peut être déplacé ou réglé au moyen d'une unité de réglage mécanique, électrique, hydraulique ou pneumatique.

19. Dispositif selon l'une des revendications 8 à 18, **caractérisé en ce que**, dans le cas où l'on utilise plusieurs arrivées de milieux, celles-ci sont alimentées depuis une conduite de raccordement principale, un ou plusieurs dispositif(s) diviseur(s) de courant en Y étant utilisé(s) pour séparer le courant volumique, dont les branches côté sortie englobent un angle de moins de 180°.

20. Dispositif selon l'une des revendications 8 à 19, **caractérisé en ce que** les conduites d'alimentation pour les milieux d'addition sont protégées contre une pénétration involontaire du milieu à traiter par des clapets anti-retour.

21. Dispositif selon la revendication 20, **caractérisé en ce que** les clapets anti-retour disposent d'une pression d'ouverture inférieure à 0,55 bar.

22. Dispositif selon l'une des revendications 8 à 21, **caractérisé en ce que** les conduites d'alimentation des milieux d'addition sont équipées de vannes de régulation pour le dosage du milieu d'addition.

23. Dispositif selon l'une des revendications 8 à 22, **caractérisé en ce que** des dispositifs de mesure sont installés côté entrée et/ou sortie, qui relèvent en continu ou par intermittence des valeurs mesurées pertinentes en regard du processus et qui les mettent à disposition et/ou les affichent sous forme d'un signal analogique ou numérique pour des unités d'évaluation intercalées à la suite.

24. Dispositif selon l'une des revendications 8 à 23, **caractérisé en ce que** les paramètres déterminant le processus sur la base des valeurs mesurées nécessaires au processus peuvent être influencés par une unité de mesure, de commande et de régulation par l'intermédiaire d'organes ou de membres de réglage correspondants.
